(19) Europäisches Patentamt
European Patent Office
Office européen des brevets

(11) **EP 4 697 833 A1**

(12) **EUROPEAN PATENT APPLICATION**
published in accordance with Art. 153(4) EPC

(43) Date of publication:
**18.02.2026 Bulletin 2026/08**

(21) Application number: **24806352.1**

(22) Date of filing: **29.04.2024**

(51) International Patent Classification (IPC):
*H04W 72/12* (2023.01)   *H04W 64/00* (2009.01)
*H04W 4/70* (2018.01)   *H04W 4/02* (2018.01)
*H04W 76/14* (2018.01)

(52) Cooperative Patent Classification (CPC):
**H04L 5/00; H04W 4/02; H04W 4/70; H04W 64/00;
H04W 72/12; H04W 72/232; H04W 72/40;
H04W 76/14**

(86) International application number:
**PCT/CN2024/090535**

(87) International publication number:
**WO 2024/234996 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2023 CN 202310547776**

(71) Applicant: **Huawei Technologies Co., Ltd.
Shenzhen, Guangdong 518129 (CN)**

(72) Inventor: **LI, Cheng
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD AND RELATED APPARATUS**

(57) Embodiments of this application disclose a communication method and a related apparatus, to enable a network device to schedule a first positioning reference signal resource for a first terminal device. The method in embodiments of this application includes: The first terminal device sends a first request to the network device, where the first request is for requesting a positioning reference signal resource. The first terminal device receives first downlink control information DCI from the network device, where the first DCI indicates the first positioning reference signal resource scheduled for the first terminal device.

FIG. 7

## Description

This application claims priority to Chinese Patent Application No. 202310547776.4, filed with the China National Intellectual Property Administration on May 15, 2023 and entitled "COMMUNICATION METHOD AND RELATED APPARATUS", which is incorporated herein by reference in its entirety.

## TECHNICAL FIELD

This application relates to the field of communication technologies, and in particular, to a communication method and a related apparatus.

## BACKGROUND

In a sidelink communication system, a terminal device may autonomously sense a positioning reference signal resource. The terminal device determines unoccupied resources in the sidelink communication system based on resource reservation information or resource occupation information that is sent by another terminal device and that is sensed or detected, and selects the positioning reference signal resource from the unoccupied resources. Then, the terminal device reserves the selected positioning reference signal resource by using control information.

However, in a scenario in which a base station controls resource allocation in a sidelink communication system, how to schedule a positioning reference signal resource for a terminal device is a problem worth considering.

## SUMMARY

This application provides a communication method and a related apparatus, to enable a network device to schedule a first positioning reference signal resource for a first terminal device.

A first aspect of this application provides a communication method, including: A first terminal device sends a first request to a network device, where the first request is for requesting a positioning reference signal resource. Then, the first terminal device receives first downlink control information (downlink control information, DCI) from the network device, where the first DCI indicates a first positioning reference signal resource scheduled for the first terminal device. In the foregoing technical solution, that the first DCI indicates the first positioning reference signal resource scheduled for the first terminal device may be replaced with: The first DCI is for scheduling the first positioning reference signal resource. The first request is merely an example of a name, and another name, for example, first information or a first indication, may alternatively be used. This is not specifically limited in this application. For example, the first request may be replaced with the first information, and the first information is for requesting the positioning reference signal resource. It can be learned from this that the first terminal device requests the positioning reference signal resource from the network device by using the first request. In this way, the network device schedules the first positioning reference signal resource for the first terminal device by using the first DCI.

According to the first aspect, in a possible implementation, the method further includes: The first terminal device sends a positioning reference signal on the first positioning reference signal resource. In this way, the positioning reference signal is sent, to facilitate sidelink positioning.

A second aspect of this application provides a communication method, including: A first terminal device receives first DCI from a network device, where the first DCI indicates a first positioning reference signal resource scheduled for the first terminal device. The first terminal device sends a positioning reference signal on the first positioning reference signal resource. In this way, the network device schedules the first positioning reference signal resource for the first terminal device by using the first DCI.

According to the first aspect or the second aspect, in a possible implementation, that the first DCI indicates the first positioning reference signal resource scheduled for the first terminal device includes: The first DCI includes a first field; and when a value of the first field is a first value, the first field indicates the first terminal device to send only a positioning reference signal in a slot scheduled by using the first DCI; or when a value of the first field is a second value, the first field indicates the first terminal device to send data and a positioning reference signal in a slot scheduled by using the first DCI. In this implementation, the network device indicates, by using the first field in the first DCI, a transmission mode of the first terminal device in the slot scheduled by using the first DCI, to indicate a corresponding positioning reference signal resource and/or a corresponding data transmission resource to the first terminal device. The first field may indicate transmission modes in all slots scheduled by using the first DCI, to help reduce indication overheads.

According to the first aspect or the second aspect, in a possible implementation, that the first DCI indicates the first positioning reference signal resource scheduled for the first terminal device includes: The first DCI includes a second field, and the second field indicates the first terminal device to send only a positioning reference signal, only data, or data and a positioning reference signal in each of one or more slots scheduled by using the first DCI. In this implementation, the network device indicates, by using the second field in the first DCI, a transmission mode in each of the one or more slots scheduled by using the first DCI, to indicate a corresponding positioning reference signal resource and/or a corresponding data transmission resource to the first terminal device. The transmission mode in each slot is indicated by the second field, so that the transmission mode in each slot is independently indicated. In addition, the transmission modes in the plurality of slots are jointly indicated, to help reduce overheads.

According to the first aspect or the second aspect, in a possible implementation, that the first DCI indicates the first positioning reference signal resource scheduled for the first terminal device includes: The first DCI is for scheduling n slots, the first DCI includes a second field, and the second field indicates the first terminal device to send only a positioning reference signal, only data, or data and a positioning reference signal in a $1^{st}$ slot in the n slots, ..., indicates the first terminal device to send only a positioning reference signal, only data, or data and a positioning reference signal in an $i^{th}$ slot, ..., or indicates the first terminal device to send only a positioning reference signal, only data, or both data and a positioning reference signal in an $n^{th}$ slot, where n is an integer greater than or equal to 1, and i is an integer greater than or equal to 2 and less than n. In this implementation, the network device indicates, by using the second field in the first DCI, a transmission mode in each of one or more slots scheduled by using the first DCI, to indicate a corresponding positioning reference signal resource and/or a corresponding data transmission resource to the first terminal device. The transmission mode in each slot is indicated by the second field, so that the transmission mode in each slot is independently indicated. In addition, the transmission modes in the plurality of slots are jointly indicated, to help reduce overheads.

According to the first aspect or the second aspect, in a possible implementation, that the first DCI indicates the first positioning reference signal resource scheduled for the first terminal device includes: The first DCI includes a plurality of third fields, and the plurality of third fields correspond to a plurality of slots scheduled by using the first DCI; and

when a value of a third field in the plurality of third fields is a third value, the third field indicates the first terminal device to send only a positioning reference signal in a slot corresponding to the third field;
when a value of a third field in the plurality of third fields is a fourth value, the third field indicates the first terminal device to send only data in a slot corresponding to the third field; or
when a value of a third field in the plurality of third fields is a fifth value, the third field indicates the first terminal device to send data and a positioning reference signal in a slot corresponding to the third field.

In this implementation, the network device indicates, by using the plurality of third fields in the first DCI, a transmission mode in each slot scheduled by using the first DCI, and the plurality of third fields correspond to the plurality of slots scheduled by using the first DCI, to indicate a corresponding positioning reference signal resource and/or a corresponding data transmission resource to the first terminal device. Each third field indicates a transmission mode in a slot corresponding to the third field, so that the transmission mode in each slot is independently indicated.

According to the first aspect or the second aspect, in a possible implementation, one third field corresponds to one or more slots.

According to the first aspect or the second aspect, in a possible implementation, the first DCI includes a fourth field, the fourth field is for an index of a dedicated resource pool, and the first positioning reference signal resource belongs to the dedicated resource pool. In this implementation, the first DCI includes the fourth field, to help the network device schedule the first positioning reference signal resource as a dedicated resource for the first terminal device, so that an appropriate positioning reference signal resource is allocated to the first terminal device, to ensure positioning performance.

According to the first aspect or the second aspect, in a possible implementation, the first DCI further includes a fifth field, and the fifth field indicates the first positioning reference signal resource scheduled for the first terminal device, or the fifth field indicates the positioning reference signal resource scheduled by using the first DCI. In this implementation, the network device indicates the specific positioning reference signal resource to the first terminal device by using the fifth field, to help the first terminal device determine the first positioning reference signal resource by using the fifth field, to implement sidelink positioning.

According to the first aspect or the second aspect, in a possible implementation, a length of the fifth field is related to a number of preconfigured positioning reference signal resources in each slot scheduled by using the first DCI, or a length of the fifth field is related to a number of positioning reference signal resources in the resource pool to which the positioning reference signal resource scheduled by using the first DCI belongs. Therefore, some possible consideration factors for the length of the fifth field are limited, to make this solution more comprehensive.

According to the first aspect or the second aspect, in a possible implementation, the fifth field indicates an identity of the positioning reference signal resource scheduled by using the first DCI. In this way, the positioning reference signal resource scheduled by using the first DCI is indicated by the identity of the positioning reference signal resource.

According to the first aspect or the second aspect, in a possible implementation, the length of the fifth field meets the following condition: $k*\left\lceil \log_2(ID_{\max}) \right\rceil$, where $\left\lceil \log_2(ID_{\max}) \right\rceil$ indicates rounding of $\log_2(ID_{\max})$, k is a number of positioning reference signal resources scheduled by using the first DCI, and $ID_{\max}$ is an identity (identity, ID) of a positioning reference signal resource with a maximum ID in the resource pool to which the positioning reference signal resource scheduled by using the first DCI belongs. The implementation in which the fifth field indicates an identity of a positioning reference signal resource provides a possible implementation of the length of the fifth field.

According to the first aspect or the second aspect, in a possible implementation, the fifth field indicates a ranking number of each positioning reference signal resource in positioning reference signal resources scheduled by using the first DCI in preconfigured positioning reference signal resources in a slot in which the positioning reference signal resource is located, or the fifth field indicates a ranking number of each positioning reference signal resource in positioning reference signal resources scheduled by using the first DCI in preconfigured positioning reference signal resources in the resource pool to which the positioning reference signal resource scheduled by using the first DCI belongs. In this way, the positioning reference signal resources scheduled by using the first DCI are indicated by using ranking numbers respectively corresponding to the positioning reference signal resources.

According to the first aspect or the second aspect, in a possible implementation, the length of the fifth field meets the following condition: $k*\left\lceil \log_2 N \right\rceil$, where $\left\lceil \log_2 N \right\rceil$ indicates rounding of $\log_2 N$, and k is a number of positioning reference signal resources scheduled by using the first DCI; and N is the number of preconfigured positioning reference signal resources in each slot scheduled by using the first DCI, N is a ranking number of a positioning reference signal resource with a maximum ranking number in each slot scheduled by using the first DCI, or N is the number of preconfigured positioning reference signal resources in the resource pool to which the positioning reference signal resource scheduled by using the first DCI belongs. The implementation in which the fifth field indicates a ranking number corresponding to a positioning reference signal resource provides a possible implementation of the length of the fifth field.

According to the first aspect or the second aspect, in a possible implementation, the length of the fifth field meets the following condition: $\left\lceil \log_2 N^k \right\rceil$, where $\left\lceil \log_2 N^k \right\rceil$ indicates rounding of $\log_2 N^k$, and k is a number of positioning reference signal resources scheduled by using the first DCI; and N is the number of preconfigured positioning reference signal resources in each slot scheduled by using the first DCI, N is a ranking number of a positioning reference signal resource with a maximum ranking number in each slot scheduled by using the first DCI, or N is the number of preconfigured positioning reference signal resources in the resource pool to which the positioning reference signal resource scheduled by using the first DCI belongs. The implementation in which the fifth field indicates a ranking number corresponding to a positioning reference signal resource provides another possible implementation of the length of the fifth field.

According to the second aspect, in a possible implementation, before that the first terminal device receives the first DCI from the network device, the method further includes: The first terminal device sends a first request to the network device, where the first request is for requesting a positioning reference signal resource. In this implementation, the first terminal device may further request the positioning reference signal resource from the network device by using the first request, to help the network device schedule a corresponding positioning reference signal resource for the first terminal device.

According to the first aspect or the second aspect, in a possible implementation, the first request includes at least one of the following: a bandwidth of the positioning reference signal resource requested by the first terminal device; a number of time domain symbols occupied by the positioning reference signal resource requested by the first terminal device; a comb size of the positioning reference signal resource requested by the first terminal device; a frequency domain offset of the positioning reference signal resource requested by the first terminal device; a start time domain symbol occupied by the positioning reference signal resource requested by the first terminal device; a number of positioning reference signal resources requested by the first terminal device; a time interval between time domain positions occupied by a plurality of positioning reference signal resources requested by the first terminal device; first indication information, where the first indication information indicates a resource pool to which the positioning reference signal resource requested by the first terminal device belongs; second indication information, where the second indication information indicates the positioning reference signal resource requested by the first terminal device; or third indication information, where the third indication information indicates that the first terminal device requests the positioning reference signal resource. This implementation provides some possible content included in the first request. This helps the network device allocate an appropriate positioning reference signal resource to the first terminal device, to improve system resource utilization and ensure positioning performance. For example, the first request may include some related configurations of the positioning reference signal resource requested by the first terminal device, so that the network device may allocate the appropriate positioning reference signal resource to the first terminal device with reference to these configurations, to ensure the positioning performance. For another example, the first request may include the second indication information, to help the network device allocate the appropriate positioning reference signal resource to the first terminal device with reference to the positioning reference signal resource indicated by the second indication information. For another example, the first request may include the third indication information, to indicate, by using the third indication information, that the first terminal device requests the positioning reference signal resource. This helps reduce indication overheads.

According to the first aspect or the second aspect, in a possible implementation, the first request is carried in a MAC CE, and the third indication information is a buffer size field in the MAC CE. When a value of the buffer size field is a reserved value or a specific value that is predefined, the buffer size field indicates that the first terminal device requests the positioning reference signal resource. Therefore, the buffer size field in the MAC CE indicates that the first terminal device requests the positioning reference signal resource. This avoids a format modification to the MAC CE, to improve practicability of this solution.

According to the first aspect or the second aspect, in a possible implementation, the first request is carried in a medium access control control element (media access control control element, MAC CE) or radio control resource (radio control resource, RRC) signaling. In this implementation, the first request may be carried in the MAC CE, and a format of the MAC CE may be similar to a format of an existing MAC CE for requesting a data transmission resource. In this way, a positioning reference signal resource scheduling process is similar to a data transmission resource scheduling process, so that compatibility and practicability of the technical solutions in this application are higher.

According to the first aspect or the second aspect, in a possible implementation, the first request is further for requesting a data transmission resource. The first request is merely an example of a name, and another name, for example, the first information or the first indication, may alternatively be used. For example, that the first request is further for requesting the data transmission resource may be replaced with: The first information further indicates a volume of to-be-transmitted data or data transmission buffer status information of the first terminal device. That is, the first terminal device reuses the first request to request the positioning reference signal resource. In this way, the network device reuses the existing data transmission resource scheduling process to schedule the positioning reference signal resource for the first terminal device. This facilitates implementation of this solution, makes little improvement on a communication protocol, and has high practicability. Alternatively, the method further includes: The first terminal device sends a second request to the network device, where the second request is for requesting a data transmission resource. The second request is merely an example of a name, and another name, for example, second information or a second indication, may alternatively be used. This is not specifically limited in this application. For example, the second request may be replaced with the second information, and the second information is for requesting the data transmission resource. That the second information is for requesting the data transmission resource may be replaced with: The second information indicates a volume of to-be-transmitted data or data transmission buffer status information of the first terminal device. Therefore, the positioning reference signal resource and the data transmission resource are separately requested by using independent requests.

According to the first aspect or the second aspect, in a possible implementation, before that the first terminal device sends the first request to the network device, the method further includes: The first terminal device sends a third request to the network device. The first terminal device receives second DCI from the network device, where the second DCI indicates a first resource. That the first terminal device sends the first request to the network device includes: The first terminal device sends the first request on the first resource. In this implementation, the first terminal device may request the first resource by using the third request, to help the first terminal device send the first request, to request the positioning reference signal resource.

According to the first aspect or the second aspect, in a possible implementation, after that the first terminal device sends the positioning reference signal on the first positioning reference signal resource, the method further includes: The first terminal device receives measurement information from a second terminal device, where the measurement information is obtained by the second terminal device by measuring the positioning reference signal. This helps the second terminal device position the first terminal device with reference to the measurement information, to implement sidelink positioning.

According to the first aspect or the second aspect, in a possible implementation, after that the first terminal device sends the positioning reference signal on the first positioning reference signal resource, the method further includes: The first terminal device receives measurement information from a second terminal device, where the measurement information is obtained by the second terminal device by measuring the positioning reference signal. This helps the second terminal device position the first terminal device with reference to the measurement information, to implement sidelink positioning.

According to the first aspect or the second aspect, in a possible implementation, after that the first terminal device receives the measurement information from the second terminal device, the method further includes: The first terminal device, sends feedback information to the network device, where the feedback information is for feeding back that the positioning reference signal is successfully sent or is successfully received. This helps a network device side learn of a sending status of the positioning reference signal and a positioning status, so that the network device determines whether to continue to schedule a positioning reference signal resource for the first terminal device.

According to the first aspect or the second aspect, in a possible implementation, the measurement information includes measurement quality obtained by the second terminal device by measuring the positioning reference signal. After that the first terminal device receives the measurement information from the second terminal device, the method further includes: When the measurement quality is greater than or equal to a first threshold, the first terminal device sends acknowledgment (acknowledgment, ACK) information to the network device; or when the measurement quality is less than a first threshold, the first terminal device sends a negative acknowledgment (negative acknowledgment, NACK) to the network device. In this implementation, the first terminal device may feed back the ACK or the NACK to the network device based on the measurement quality. For example, the ACK may be for feeding back, to the network device, that the measurement quality is greater than or equal to the first threshold, may indicate that the measurement quality meets a requirement of the first terminal device, or may be for feeding back, to the network device, that the positioning reference signal is successfully measured. The NACK may be for feeding back, to the network device, that the measurement quality is less than the first threshold, may indicate that the measurement quality does not meet a requirement of the first terminal device, or may be for feeding back, to the network device, that the positioning reference signal fails to be measured.

A third aspect of this application provides a communication apparatus, including: a transceiver module, configured to: send a first request to a network device, where the first request is for requesting a positioning reference signal resource; and receive first DCI from the network device, where the first DCI indicates a first positioning reference signal resource scheduled for the communication apparatus.

According to the third aspect, in a possible implementation, the transceiver module is further configured to send a positioning reference signal on the first positioning reference signal resource.

A fourth aspect of this application provides a communication apparatus, including: a transceiver module, configured to: receive first DCI from a network device, where the first DCI indicates a first positioning reference signal resource scheduled for the communication apparatus; and send a positioning reference signal on the first positioning reference signal resource.

According to the third aspect or the fourth aspect, in a possible implementation, that the first DCI indicates the first positioning reference signal resource scheduled for the communication apparatus includes: The first DCI includes a first field; and when a value of the first field is a first value, the first field indicates the communication apparatus to send only a positioning reference signal in a slot scheduled by using the first DCI; or when a value of the first field is a second value, the first field indicates the communication apparatus to send data and a positioning reference signal in a slot scheduled by using the first DCI.

According to the third aspect or the fourth aspect, in a possible implementation, that the first DCI indicates the first positioning reference signal resource scheduled for the communication apparatus includes: The first DCI includes a second field, and the second field indicates the communication apparatus to send only a positioning reference signal, only data, or data and a positioning reference signal in each of one or more slots scheduled by using the first DCI.

According to the third aspect or the fourth aspect, in a possible implementation, that the first DCI indicates the first positioning reference signal resource scheduled for the communication apparatus includes: The first DCI is for scheduling n slots, the first DCI includes a second field, and the second field indicates the communication apparatus to send only a positioning reference signal, only data, or data and a positioning reference signal in a 1st slot in the n slots, ..., indicates the communication apparatus to send only a positioning reference signal, only data, or data and a positioning reference signal in an $i^{th}$ slot, ..., or indicates the communication apparatus to send only a positioning reference signal, only data, or data and a positioning reference signal in an $n^{th}$ slot, where n is an integer greater than or equal to 1, and i is an integer greater than or equal to 2 and less than n.

According to the third aspect or the fourth aspect, in a possible implementation, that the first DCI indicates the first positioning reference signal resource scheduled for the communication apparatus includes: The first DCI includes a plurality of third fields, and the plurality of third fields correspond to a plurality of slots scheduled by using the first DCI; and

when a value of a third field in the plurality of third fields is a third value, the third field indicates the communication apparatus to send only a positioning reference signal in a slot corresponding to the third field;
when a value of a third field in the plurality of third fields is a fourth value, the third field indicates the communication apparatus to send only data in a slot corresponding to the third field; or
when a value of a third field in the plurality of third fields is a fifth value, the third field indicates the communication apparatus to send data and a positioning reference signal in a slot corresponding to the third field.

According to the third aspect or the fourth aspect, in a possible implementation, one third field corresponds to one or more slots.

According to the third aspect or the fourth aspect, in a possible implementation, the first DCI includes a fourth field, the fourth field is for an index of a dedicated resource pool, and the first positioning reference signal resource belongs to the dedicated resource pool.

According to the third aspect or the fourth aspect, in a possible implementation, the first DCI further includes a fifth field, and the fifth field indicates the first positioning reference signal resource scheduled for the communication apparatus, or the fifth field indicates the positioning reference signal resource scheduled by using the first DCI.

According to the third aspect or the fourth aspect, in a possible implementation, a length of the fifth field is related to a number of preconfigured positioning reference signal resources in each slot scheduled by using the first DCI, or a length of the fifth field is related to a number of positioning reference signal resources in the resource pool to which the positioning reference signal resource scheduled by using the first DCI belongs.

According to the third aspect or the fourth aspect, in a possible implementation, the fifth field indicates an identity of the positioning reference signal resource scheduled by using the first DCI.

According to the third aspect or the fourth aspect, in a possible implementation, the length of the fifth field meets the following condition: $k * \left\lceil \log_2(ID_{max}) \right\rceil$, where $\left\lceil \log_2(ID_{max}) \right\rceil$ indicates rounding of $\log_2(ID_{max})$, k is a number of positioning reference signal resources scheduled by using the first DCI, and $ID_{max}$ is an identity (identity, ID) of a positioning reference signal resource with a maximum ID in the resource pool to which the positioning reference signal resource scheduled by using the first DCI belongs.

According to the third aspect or the fourth aspect, in a possible implementation, the fifth field indicates a ranking number of each positioning reference signal resource in positioning reference signal resources scheduled by using the first DCI in preconfigured positioning reference signal resources in a slot in which the positioning reference signal resource is located, or the fifth field indicates a ranking number of each positioning reference signal resource in positioning reference signal resources scheduled by using the first DCI in preconfigured positioning reference signal resources in the resource pool to which the positioning reference signal resource scheduled by using the first DCI belongs.

According to the third aspect or the fourth aspect, in a possible implementation, the length of the fifth field meets the following condition: $k * \left\lceil \log_2 N \right\rceil$, where $\left\lceil \log_2 N \right\rceil$ indicates rounding of $\log_2 N$, and k is a number of positioning reference signal resources scheduled by using the first DCI; and N is the number of preconfigured positioning reference signal resources in each slot scheduled by using the first DCI, N is a ranking number of a positioning reference signal resource with a maximum ranking number in each slot scheduled by using the first DCI, or N is the number of preconfigured positioning reference signal resources in the resource pool to which the positioning reference signal resource scheduled by using the first DCI belongs.

According to the third aspect or the fourth aspect, in a possible implementation, the length of the fifth field meets the following condition: $\left\lceil \log_2 N^k \right\rceil$ where $\left\lceil \log_2 N^k \right\rceil$ indicates rounding of $\log_2 N^k$, and k is a number of positioning reference signal resources scheduled by using the first DCI; and N is the number of preconfigured positioning reference signal resources in each slot scheduled by using the first DCI, N is a ranking number of a positioning reference signal resource with a maximum ranking number in each slot scheduled by using the first DCI, or N is the number of preconfigured positioning reference signal resources in the resource pool to which the positioning reference signal resource scheduled by using the first DCI belongs.

According to the fourth aspect, in a possible implementation, the transceiver module is further configured to send a first request to the network device, where the first request is for requesting a positioning reference signal resource.

According to the third aspect or the fourth aspect, in a possible implementation, the first request includes at least one of the following: a bandwidth of the positioning reference signal resource requested by the communication apparatus; a number of time domain symbols occupied by the positioning reference signal resource requested by the communication apparatus; a comb size of the positioning reference signal resource requested by the communication apparatus; a frequency domain offset of the positioning reference signal resource requested by the communication apparatus; a start time domain symbol occupied by the positioning reference signal resource requested by the communication apparatus; a number of positioning reference signal resources requested by the communication apparatus; a time interval between time domain positions occupied by a plurality of positioning reference signal resources requested by the communication apparatus; first indication information, where the first indication information indicates a resource pool to which the positioning reference signal resource requested by the communication apparatus belongs; second indication information, where the second indication information indicates the positioning reference signal resource requested by the communication apparatus; or third indication information, where the third indication information indicates that the communication apparatus requests the positioning reference signal resource.

According to the third aspect or the fourth aspect, in a possible implementation, the first request is carried in a MAC CE, and the third indication information is a buffer size field in the MAC CE. When a value of the buffer size field is a reserved value or a specific value that is predefined, the buffer size field indicates that the first terminal device requests the positioning reference signal resource.

According to the third aspect or the fourth aspect, in a possible implementation, the first request is carried in a MAC CE or RRC signaling.

According to the third aspect or the fourth aspect, in a possible implementation, the first request is further for requesting a data transmission resource. Alternatively, the transceiver module is further configured to send a second request to the network device, where the second request is for requesting a data transmission resource.

According to the third aspect or the fourth aspect, in a possible implementation, the transceiver module is further configured to: send a third request to the network device; receive second DCI from the network device, where the second DCI indicates a first resource; and send the first request on the first resource.

According to the third aspect or the fourth aspect, in a possible implementation, the transceiver module is further configured to receive measurement information from a second terminal device, where the measurement information is obtained by the second terminal device by measuring the positioning reference signal.

According to the third aspect or the fourth aspect, in a possible implementation, the transceiver module is further configured to send feedback information to the network device, where the feedback information is for feeding back that the positioning reference signal is successfully sent or is successfully received.

According to the third aspect or the fourth aspect, in a possible implementation, the measurement information includes measurement quality obtained by the second terminal device by measuring the positioning reference signal. The transceiver module is further configured to: when the measurement quality is greater than or equal to a first threshold, send an ACK to the network device; or when the measurement quality is less than a first threshold, send a NACK to the network device.

A fifth aspect of this application provides a communication apparatus, where the communication apparatus includes a processor. The processor is configured to invoke a computer program or computer instructions in a memory, to enable the processor to be configured to perform any one of the implementations according to the first aspect or the second aspect.

Optionally, the communication apparatus further includes a transceiver. The processor is configured to control the transceiver to perform any one of the implementations according to the first aspect or the second aspect.

Optionally, the processor is integrated with the memory.

A sixth aspect of this application provides a computer program product including computer instructions. When the computer program product runs on a computer, the computer is enabled to perform any one of the implementations according to the first aspect or the second aspect.

A seventh aspect of this application provides a computer-readable storage medium, including computer instructions. When the computer instructions are run on a computer, the computer is enabled to perform any one of the implementations according to the first aspect or the second aspect.

An eighth aspect of this application provides a chip apparatus, including a processor, configured to invoke a computer program or computer instructions in a memory, to enable the processor to perform any one of the implementations according to the first aspect or the second aspect.

Optionally, the processor is coupled to the memory through an interface.

A ninth aspect of this application provides a communication system. The communication system includes a first terminal device and a network device. The terminal device is configured to perform the method according to the first aspect or the second aspect. The network device is configured to send first DCI to the first terminal device, where the first DCI indicates a first positioning reference signal resource scheduled for the first terminal device. Optionally, the network device is further configured to receive a first request of the first terminal device, where the first request is for requesting a positioning reference signal resource.

## BRIEF DESCRIPTION OF DRAWINGS

FIG. 1 is a diagram of a structure of a communication system according to an embodiment of this application;
FIG. 2 is a diagram of another structure of a communication system according to an embodiment of this application;
FIG. 3 is a diagram of still another structure of a communication system according to an embodiment of this application;
FIG. 4 is a diagram of yet another structure of a communication system according to an embodiment of this application;
FIG. 5A is a diagram of a plurality of resource pools;
FIG. 5B is a diagram of transmission modes of a terminal device on scheduled resources in a shared resource pool and a dedicated resource pool;
FIG. 6 is a diagram of scheduling a data transmission resource for user equipment A (user equipment A, UE-A) by a base station;

FIG. 7 is a diagram of an embodiment of a communication method according to embodiments of this application;

FIG. 8 is a diagram of a first field according to an embodiment of this application;

FIG. 9A is a diagram of a format of a MAC CE according to an embodiment of this application;

FIG. 9B is a diagram of another format of a MAC CE according to an embodiment of this application;

FIG. 9C is a diagram of still another format of a MAC CE according to an embodiment of this application;

FIG. 9D is a diagram of yet another format of a MAC CE according to an embodiment of this application;

FIG. 9E is a diagram of yet another format of a MAC CE according to an embodiment of this application;

FIG. 9F is a diagram of yet another format of a MAC CE according to an embodiment of this application;

FIG. 10 is a diagram of another embodiment of a communication method according to embodiments of this application;

FIG. 11 is a diagram of still another embodiment of a communication method according to embodiments of this application;

FIG. 12 is a diagram of yet another embodiment of a communication method according to embodiments of this application;

FIG. 13 is a diagram of a structure of a communication apparatus according to an embodiment of this application;

FIG. 14 is a diagram of another structure of a communication apparatus according to an embodiment of this application; and

FIG. 15 is a diagram of a structure of a terminal device according to an embodiment of this application.

## DESCRIPTION OF EMBODIMENTS

Embodiments of this application provide a communication method and a related apparatus, to enable a network device to schedule a first positioning reference signal resource for a first terminal device.

The following clearly and completely describes the technical solutions in embodiments of this application with reference to the accompanying drawings in embodiments of this application. It is clear that the described embodiments are merely some but not all of embodiments of this application. All other embodiments obtained by persons skilled in the art based on embodiments of this application without creative efforts shall fall within the protection scope of this application.

Reference to "one embodiment", "some embodiments", or the like described in this application means that one or more embodiments of this application include a specific feature, structure, or characteristic described with reference to this embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner. In this specification, including A, B, C, and/or D indicates that one or more of A, B, C, and D are included.

In descriptions of this application, unless otherwise specified, "/" means "or". For example, A/B may indicate A or B. The term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c may be singular or plural.

The technical solutions in embodiments of this application may be applied to various communication systems, for example, a 5th generation (5th generation, 5G) system, a new radio (new radio, NR) system, a wireless local area network (wireless local area network, WLAN) system, a 3rd generation partnership project (3rd generation partnership project, 3GPP)-related cellular system, a communication system that supports convergence of a plurality of wireless technologies, a device-to-device (device-to-device, D2D) communication system, a machine-to-machine (machine-to-machine, M2M) communication system, a machine type communication (machine type communication, MTC) system, a sidelink (sidelink, SL) communication system, or a future-oriented evolved system. This is not specifically limited in this application.

For example, the sidelink communication system includes an internet of things system. The system may be specifically a vehicle-to-everything (vehicle-to-everything, V2X) system, an industrial internet of things system, a smart home system, or the like, for example, a public safety (public safety) system, a smart city system, a transportation security system, an industrial control system, a self-driving system, or an industrial robot system. The V2X system may be a vehicle-to-vehicle (vehicle-to-vehicle, V2V) communication system (also referred to as a vehicle-to-vehicle communication system), a vehicle-to-infrastructure (vehicle-to-infrastructure, V2I) communication system (also referred to as a vehicle-to-infrastructure communication system), a vehicle-to-pedestrian (vehicle-to-pedestrian, V2P) communication system (also referred to as a vehicle-to-pedestrian communication system), or a vehicle-to-network (vehicle-to-network, V2N) communication system (also referred to as a vehicle-to-network communication system).

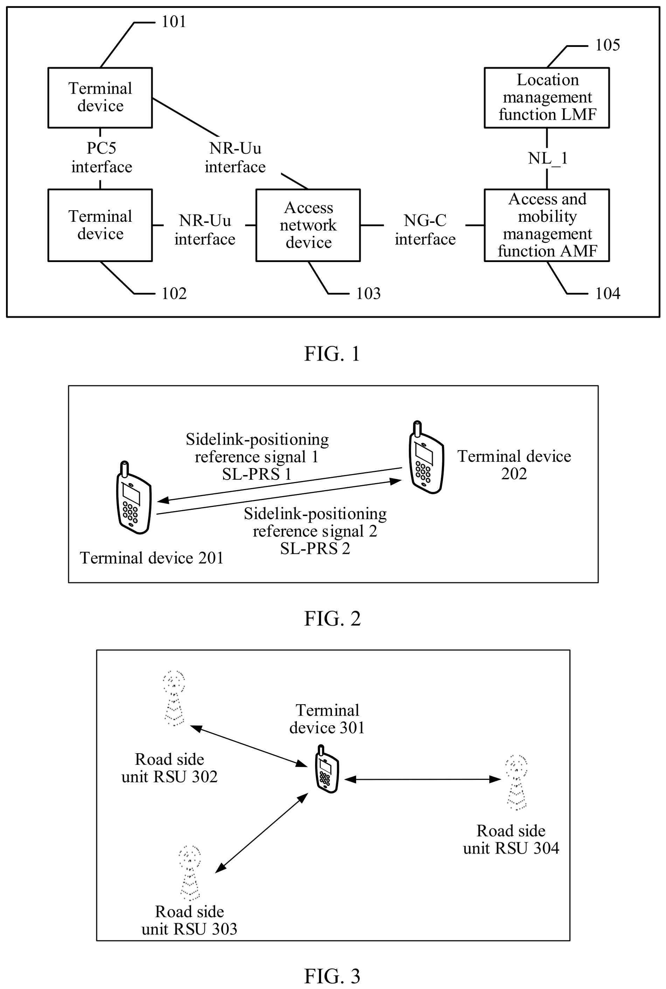

The following describes, with reference to FIG. 1 to FIG. 4, some scenarios to which this application is applicable.

FIG. 1 is a diagram of a structure of a communication system according to an embodiment of this application. Refer to FIG. 1. The communication system includes a terminal device 101, a terminal device 102, an access network device 103, an access and mobility management function (access and mobility management function, AMF) 104, and a location management function (location management function, LMF) 105.

Optionally, the terminal device 101 may be connected to the terminal device 102 through an interface. The access network device 103 may be connected to the AMF 104 through an interface. The AMF 104 may be connected to the LMF 105 through an interface.

For example, the terminal device 101 may be connected to the terminal device 102 through a ProSe communication 5 (ProSe communication 5, PC5) interface. The terminal device 101 and the terminal device 102 are separately connected to the access network device 103 through NR-Uu interfaces. The access network device 103 is connected to the AMF 104 through an NG-C interface. The AMF 104 is connected to the LMF 105 through an NL1 interface. The NR-Uu interface is a communication interface between a terminal device and an access network device. The NG-C interface is a control plane interface between an access network and a core network. The NL1 interface is a communication interface between an AMF and an LMF. The NR-Uu interface is a communication interface between a terminal device and an access network device. The NG-C interface is a control plane interface between an access network and a core network. The NL1 interface is a communication interface between an AMF and an LMF.

FIG. 1 shows only an example in which the communication system includes the terminal device 101, the terminal device 102, and the access network device 103. However, during actual application, the communication system may include at least two terminal devices and at least one access network device. This is not specifically limited in this application. The technical solutions of this application may be performed between the terminal device 101 or the terminal device 102 and the access network device 103. The technical solutions of this application may be performed between terminal device 101 and the terminal device 102.

FIG. 2 is a diagram of another structure of a communication system according to an embodiment of this application. Refer to FIG. 2. The communication system includes a terminal device 201 and a terminal device 202. The terminal device 201 communicates with the terminal device 202 through a PC5 interface. The technical solutions of this application may be performed between terminal device 201 and the terminal device 202.

FIG. 3 is a diagram of still another structure of a communication system according to an embodiment of this application. Refer to FIG. 3. The communication system includes a terminal device 301, a road side unit (road side unit, RSU) 302, an RSU 303, and an RSU 304. The terminal device 301 and the RSU 302 to the RSU 304 are outside signal coverage of an access network device. As shown in FIG. 3, the terminal device 301 communicates with the RSU through a PC5 interface. The technical solutions of this application may be performed between the terminal device 301 and the RSU.

It should be noted that, the form of the RSU in the communication system shown in FIG. 3 is merely an example, and specifically constitutes no limitation on the RSU in this application.

It should be noted that the RSU is a roadside unit deployed on a roadside, supports a sidelink communication related protocol and a sidelink positioning related protocol, and can provide a wireless communication function for a terminal device. The RSU may be a roadside station, an access point, or a sidelink device in various forms. For an access network device, the RSU is a terminal device. For a terminal device, the RSU may serve as an access network device.

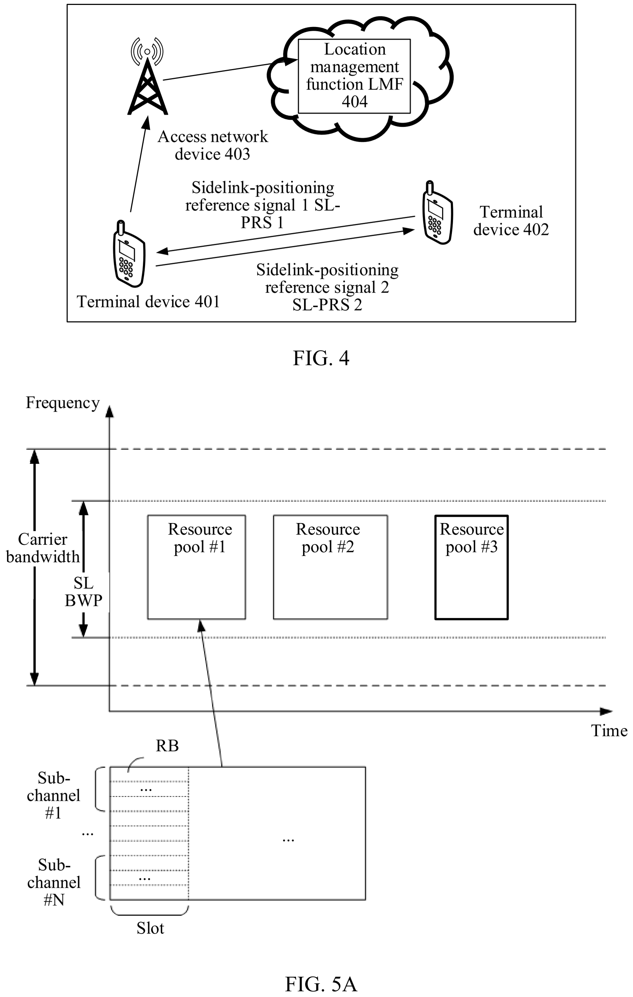

FIG. 4 is a diagram of yet another structure of a communication system according to an embodiment of this application. The communication system includes a terminal device 401, a terminal device 402, an access network device 403, and an LMF 404. The terminal device 401 is within signal coverage of the access network device 403, and the technical solutions of this application may be performed between the terminal device 401 and the access network device 403. The technical solutions of this application may be performed between terminal device 401 and the terminal device 402.

In the communication systems shown in FIG. 1 and FIG. 4, the LMF is a name in a current communication system. In a future communication system, a name of the LMF may change with evolution of the communication system. The name of the LMF is not limited in this application. For example, the LMF may be referred to as a positioning device, and the positioning device is configured to perform positioning calculation on a location of a terminal device. In the current communication system or the future communication system, any functional network element that has another name and that has a function similar to that of the LMF may be understood as the positioning device in embodiments of this application, and is usable in a method provided in embodiments of this application.

The foregoing communication systems to which this application is applicable are merely examples. During actual application, this application is further applicable to another communication system with a positioning requirement. This is not specifically limited in this application. The foregoing examples are not intended to limit the technical solutions of this application.

The following describes a terminal device and a network device in this application.

The terminal device may be a wireless terminal device that can receive scheduling and indication information of an access network device. The wireless terminal device may be a device that provides a user with voice and/or data connectivity, a handheld device with a wireless connection function, or another processing device connected to a wireless modem.

The terminal device is also referred to as user equipment (user equipment, UE), a mobile station (mobile station, MS), customer premises equipment (customer premise equipment, CPE), a mobile terminal (mobile terminal, MT), or the like. The terminal device is a device that includes a wireless communication function (providing a user with voice/data connectivity), for example, a handheld device or a vehicle-mounted device with a wireless connection function. Currently, some examples of the terminal device are: a mobile phone (mobile phone), a tablet computer, a notebook computer, a palmtop computer, a train, a car, an uncrewed aerial vehicle, an airplane, a mobile internet device (mobile internet device, MID), a wearable device, a virtual reality (virtual reality, VR) device, an augmented reality (augmented reality, AR) device, a wireless terminal in industrial control (industrial control), a wireless terminal in an internet of vehicles, a wireless terminal (for example, an uncrewed aerial vehicle or a vehicle) in self-driving (self-driving), a wireless terminal in a smart grid (smart grid), a wireless terminal in transportation safety (transportation safety), a wireless terminal in a smart city (smart city), and the like. For example, the wireless terminal in the internet of vehicles may be a vehicle-mounted device, an entire vehicle device, a vehicle-mounted module, or a vehicle. The wireless terminal in the industrial control may be a robot, or the like. Alternatively, the terminal device may be a terminal device in a 5th generation (5th generation, 5G) network, a terminal device in a future evolved public land mobile network (public land mobile network, PLMN), or the like. Optionally, the terminal device may communicate with a plurality of access network devices that use different technologies. For example, the terminal device may communicate with an access network device that supports long term evolution (long term evolution, LTE), may communicate with an access network device that supports 5G, and may implement dual connectivity to an access network device that supports LTE and an access network device that supports 5G. This is not limited in this application.

In this application, an apparatus configured to implement a function of the terminal device may be the terminal device, or may be an apparatus that can support the terminal device to implement the function. For example, the apparatus is a chip system, a hardware circuit, a software module, or a combination of a hardware circuit and a software module. The apparatus may be installed in the terminal device or may be used in collaboration with the terminal device. For example, the terminal device may alternatively be a chip, a module, or a control unit in the foregoing possible devices or apparatuses. This is not specifically limited in this application. In the technical solutions provided in this application, an example in which the apparatus configured to implement the function of the terminal device is the terminal device and the terminal device is UE is used to describe the technical solutions provided in this application.

In this application, the chip system may include a chip, or may include a chip and another discrete component.

The network device may be a device in a wireless network. For example, the network device may be a device that is deployed in a radio access network and that provides a wireless communication function for a terminal device. For example, the network device may be a radio access network (radio access network, RAN) node that connects the terminal device to the wireless network, and may also be referred to as an access network device, a RAN entity, an access node, a network node, a communication apparatus, or the like.

Specifically, the network device may be an access network device in a 3rd generation partnership project (3rd generation partnership project, 3GPP)-related cellular system, for example, a 4G communication system or a 5G communication system. Alternatively, the network device may be an access network device in an open radio access network (open RAN, O-RAN or ORAN) or a cloud radio access network (cloud radio access network, CRAN). Alternatively, the network device may be an access network device in a communication system obtained by converging two or more of the foregoing communication systems.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a macro base station, a micro base station, a wireless relay node, a donor node, a radio controller in a CRAN scenario, a wireless backhaul node, a transmission point (transmission point, TP), a transmission reception point (transmission reception point, TRP), or the like, or may be a network device in a 5G mobile communication system, for example, a next generation NodeB (next generation NodeB, gNB), a TRP, or a TP in an NR system, or one antenna panel or one group of antenna panels (including a plurality of antenna panels) of a base station in a 5G mobile communication system. Alternatively, the network device may be a network node, for example, a central unit (central unit, CU), a distributed unit (distributed unit, DU), a CU-control plane (control plane, CP), a CU-user plane (user plane, UP), or a radio unit (radio unit, RU), that is included in a gNB or a transmission point. The CU and the DU may be separately disposed, or may be included in a same network element, for example, a BBU. The RU may be included in a radio frequency device or a radio frequency unit, for example, a remote radio unit (remote radio unit, RRU), an active antenna unit (active antenna unit, AAU), or a remote radio head (remote radio head, RRH). Alternatively, the network device may be a server, a wearable device, a vehicle, a vehicle-mounted device, or the like. For example, an access network device in a V2X technology may be a road side unit (road side unit, RSU).

It should be noted that in different systems, the CU (or the CU-CP and the CU-UP), the DU, or the RU may have different names, but persons skilled in the art may understand meanings of the names. For example, in an ORAN system, the CU may also be referred to as an open central unit (open central unit, O-CU) or an open CU, the DU may also be referred to as an open distributed unit (open distributed unit, O-DU), the central unit-control plane (central unit-control plane, CU-CP) may also be referred to as an open central unit-control plane (open central unit-control plane, O-CU-CP) or an open CU-CP, the central unit-user plane (central unit-user plane, CU-UP) may also be referred to as an open central unit-user plane (open central unit-user plane, O-CU-UP) or an open CU-UP, and the RU may also be referred to as an open radio unit (open radio unit, O-RU). This is not specifically limited in this application. Any one of the CU, the CU-CP, the CU-UP, the DU, and the RU in this application may be implemented by a software module, a hardware module, or a combination of a software module and a hardware module.

Optionally, for network elements in the ORAN system, each network element may implement a protocol layer function enumerated in Table 1.

Table 1

| ORAN network element | Protocol layer function |
| --- | --- |
| O-CU-CP | Radio resource control (radio resource control, RRC) and packet data convergence protocol control plane (packet data convergence protocol control plane, PDCP-C) |
| O-CU-UP | Service data adaptation protocol (service data adaptation protocol, SDAP) and packet data convergence protocol user plane (packet data convergence protocol user plane, PDCP-U) |
| O-DU | Radio link control (radio link control, RLC), medium access control (media access control, MAC), and higher physical layer (PHY-high) |
| O-RU | Lower physical layer (PHY-low) |

The following describes architectures of a CU and a DU of an access network device. The access network device includes at least one CU and at least one DU. Optionally, the access network device further includes at least one RU.

The following provides descriptions by using an example in which the access network device includes one CU and one DU. The CU has some functions of a core network, and the CU may include a CU-CP and a CU-UP. The CU and the DU may be configured based on protocol layer functions of a wireless network that are implemented by the CU and the DU. For example, the CU is configured to implement functions of a packet data convergence protocol (packet data convergence protocol, PDCP) layer and a protocol layer (for example, an RRC layer and/or an SDAP layer) above the PDCP layer. The DU is configured to implement a function of a protocol layer (for example, an RLC layer, a MAC layer, and/or a physical (physical, PHY) layer) below the PDCP layer. For another example, the CU is configured to implement a function of a protocol layer (for example, an RRC layer and/or an SDAP layer) above a PDCP layer, and the DU is configured to implement functions of the PDCP layer and a protocol layer (for example, an RLC layer, a MAC layer, and/or a PHY layer) below the PDCP layer.

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may interact with a network element that is in the core network and that is configured to implement a control plane function. The network element that is in the core network and that is configured to implement the control plane function may be an access and mobility function network element, for example, an access and mobility management function (access and mobility management function, AMF) in a 5G system. The access and mobility management function network element is configured to be responsible for mobility management, for example, location update of a terminal device, network registration of the terminal device, and handover of the terminal device, in a mobile network. The CU-UP may interact with a network element that is in the core network and that is configured to implement a user plane function. The network element that is in the core network and that is configured to implement the user plane function, for example, a user plane function (user plane function, UPF) in the 5G system, is configured to be responsible for forwarding and receiving data in the terminal device.

The foregoing configuration of the CU and the DU is merely an example. Alternatively, functions of the CU and the DU may be configured as needed. For example, the CU or the DU may be configured to have functions of more protocol layers, or the CU or the DU may be configured to have a part of processing functions of a protocol layer. For example, a part of functions of the RLC layer and a function of a protocol layer above the RLC layer are set on the CU, and a remaining function of the RLC layer and a function of a protocol layer below the RLC layer are set on the DU. For another example, functions of the CU or the DU may be obtained through division based on a service type or another system requirement. For example, division is performed based on a latency, a function whose processing time needs to satisfy a low-latency requirement is set on the DU, and a function whose processing time does not need to satisfy the latency requirement is set on the CU.

The DU and the RU may cooperate to jointly implement a function of the PHY layer. One DU may be connected to one or more RUs. Functions of the DU and the RU may be configured into a plurality of modes according to a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer, or implement the lower-layer function and a radio frequency function. The higher-layer function of the physical layer may include a part of functions of the physical layer, and the part of functions are closer to the MAC layer. The lower-layer function of the physical layer may include the other part of functions of the physical layer, and the other part of functions are closer to an intermediate radio frequency side.

In this application, an apparatus configured to implement a function of the network device may be the network device, or may be an apparatus that can support the network device to implement the function. For example, the apparatus is a chip system, a hardware circuit, a software module, or a combination of a hardware circuit and a software module. The apparatus may be installed in the network device or may be used in collaboration with the network device. For example, the network device may be the foregoing device or apparatus, or may be a component (for example, a chip), a module, or a unit in the foregoing device or apparatus. This is not specifically limited in this application. In the technical solutions provided in this application, an example in which the apparatus configured to implement the function of the network device is the network device and the network device is a base station is used to describe the technical solutions provided in this application.

A communication system to which the technical solutions of this application are applicable includes a first terminal device and a network device. Optionally, the communication system further includes a communication device. Transmission and measurement of a positioning reference signal are performed between the first terminal device and the communication device. Optionally, the communication device is a second terminal device, an RSU, or an access network device. This is not specifically limited in this application.

To help understand the technical solutions of this application, technical terms in this application are first described.

Resource pool (resource pool): For one resource pool, one or more consecutive physical resource blocks (physical resource blocks, PRBs) (or referred to as resource blocks (resource blocks, RBs)) may be configured in frequency domain, and one or more slots (slots) may be configured in time domain. A plurality of slots may be consecutive or non-consecutive.

A positioning function is introduced to a sidelink communication system. To support the positioning function, resource pools are classified into two types. A first type is a shared resource pool (shared resource pool), to be specific, data and a positioning reference signal may be sent in the resource pool. A second type is a dedicated resource pool (dedicated resource pool), to be specific, the resource pool is for sending a positioning reference signal and related control information, and the dedicated resource pool cannot be for sending data.

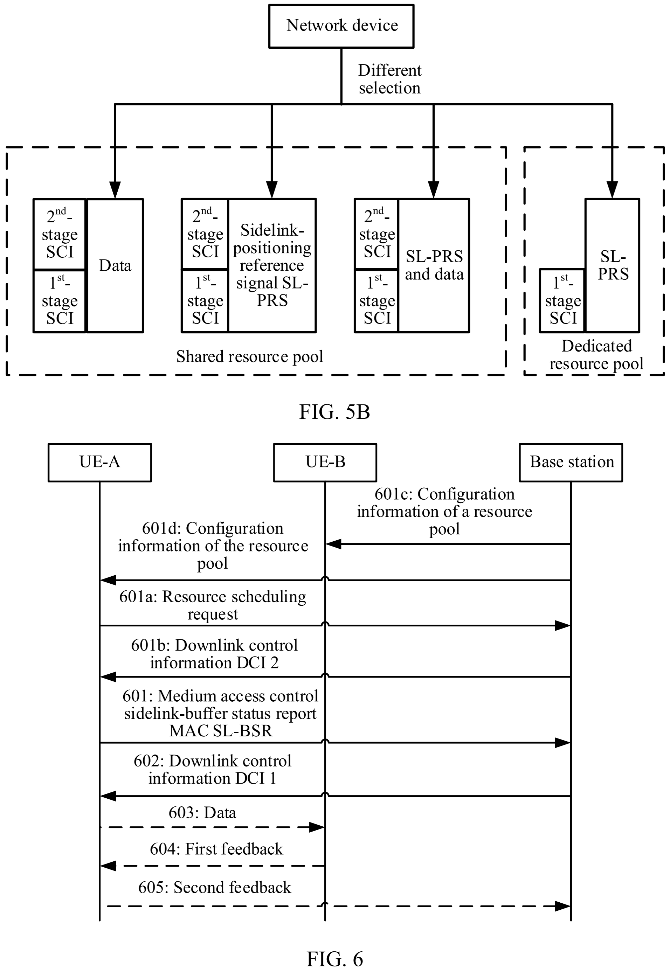

To help understand the meaning of the resource pool, the following describes an example of the resource pool in the sidelink communication system with reference to FIG. 5A. FIG. 5A is a diagram of a plurality of resource pools. A partial spectrum that is in a carrier bandwidth (carrier bandwidth) and that is for a sidelink may be referred to as a sidelink bandwidth part SL BWP (sidelink bandwidth part), and a plurality of resource pools may be defined in the SL BWP. For example, FIG. 5A shows three resource pools (a resource pool #1, a resource pool #2, and a resource pool #3). One of the resource pools is used as an example for description. A plurality of consecutive RBs may be configured in one resource pool in frequency domain, and a specific number of consecutive RBs may form one sub-channel. As shown in FIG. 5B, in a shared resource pool, a network device may schedule data for a terminal device, and the terminal device sends only the data on a resource scheduled by the network device. Alternatively, a network device may schedule a positioning reference signal for a terminal device, and the terminal device sends only the positioning reference signal on a resource scheduled by the network device. Alternatively, a network device may schedule data and a positioning reference signal for a terminal device, and the terminal device sends the data and the positioning reference signal on a resource scheduled by the network device. In other words, in the shared resource pool, the terminal device has three transmission modes on the resource scheduled by the network device: sending only a positioning reference signal, sending only data, or sending data and a positioning reference signal. In a dedicated resource pool, a network device may schedule a positioning reference signal for a terminal device, and the terminal device sends only the positioning reference signal on a resource scheduled by the network device.

Sub-channel: A bandwidth of the sub-channel may be configured in configuration information of a resource pool.

For example, the bandwidth of the sub-channel is 1 MHz (megahertz) or 2 MHz. For another example, one sub-channel includes 10 RBs. Alternatively, a bandwidth of the sub-channel may be determined based on a bandwidth of a resource pool, a number of positioning reference signal resources, and the like. This is not specifically limited in this application.

DCI format: DCI in different formats has different functions. Currently, DCI formats mainly include Format (Format) 3_0, Format 3_1, Format 0_0, and Format 0_1. Format 3_0 is for scheduling a physical sidelink control channel (physical sidelink control channel, PSCCH) and a physical sidelink shared channel (physical sidelink shared channel, PSSCH) in a cell of an NR system. Format 3_1 is for scheduling a PSCCH and a PSSCH in a cell of an LTE system. Format 0_0 is for scheduling a physical uplink shared channel (physical uplink shared channel, PUSCH) in a cell. Format 0_1 is for scheduling one or more PUSCHs in a cell, or indicates configured grant (configured grant, CG)-downlink feedback information to UE.

In the sidelink communication system, a spectrum resource is at a granularity of a sub-channel, a resource pool, or a BWP. One BWP may be configured for one user, and one BWP may be divided into one or more resource pools. One resource pool includes a plurality of sub-channels. Each sub-channel includes one or more RBs.

On a sidelink communication resource, resource scheduling supports two modes: A terminal device autonomously senses a resource. A network device schedules a resource for a terminal device. In the mode in which the terminal device autonomously senses the resource, the terminal device determines unoccupied resources in the sidelink communication system based on control information that is sent by another terminal device and that is sensed or detected, and selects a resource from the unoccupied resources. In the mode in which the network device schedules the resource for the terminal device, when the terminal device needs a resource, the terminal device first initiates a resource request to the network device. Then, the network device allocates a corresponding resource to the terminal device based on the resource request.

The sidelink communication system may include a data transmission resource and a positioning reference signal resource. For a process in which the terminal device autonomously senses the data transmission resource and/or the positioning reference signal resource, refer to the existing mode. Details are not described in this application. Currently, in the sidelink communication system, a process in which the network device schedules the data transmission resource for the terminal device is specified. With reference to FIG. 6, the following describes the process in which the network device schedules the data transmission resource for the terminal device. In FIG. 6, an example in which terminal devices are UE-A and UE-B and the network device is a base station is for description.

Refer to FIG. 6. A process in which the base station schedules a data transmission resource for the UE-A includes the following steps.

601: The UE-A sends a medium access control sidelink-buffer status report (media radio control sidelink-buffer status report, MAC SL-BSR) to the base station.

The MAC SL-BSR is for reporting a current data buffer status at a MAC layer of the UE-A, for example, a volume of data to be transmitted at the MAC layer.

Optionally, the UE-A sends the MAC SL-BSR to the base station through a PUSCH.

602: The base station sends DCI 1 to the UE-A.

The DCI 1 indicates a data transmission resource scheduled for the UE-A. Optionally, the DCI 1 is in Format 3_0, or may be in another format. This is not specifically limited in this application.

Specifically, after the base station receives the volume of data to be transmitted at the MAC layer and the like that are reported by the UE-A, the base station allocates the corresponding data transmission resource to the UE-A based on a corresponding scheduling algorithm and an available data transmission resource. Then, the base station indicates the data transmission resource to the UE-A by using the DCI 1.

Optionally, the base station sends the DCI 1 to the UE-A through a PDCCH.

Optionally, the process shown in FIG. 6 further includes step 601a and step 601b. Step 601a and step 601b may be performed before step 601.

601a: The UE-A sends a resource scheduling request (resource scheduling request) to the base station.

Optionally, the UE-A sends the resource scheduling request to the base station through a physical uplink control channel (physical uplink control channel, PUCCH).

601b: The base station sends DCI 2 to the UE-A.

The DCI 2 is for scheduling an uplink resource for the UE-A. Optionally, step 601 includes: The UE-A sends the MAC SL-BSR to the base station through the uplink resource. Optionally, the DCI 2 is in Format 0_0 or Format 0_1.

Optionally, the process shown in FIG. 6 further includes step 601c and step 601d. Step 601c and step 601d may be performed before step 601a.

601c: The base station sends configuration information of a resource pool to the UE-A. The configuration information of the resource pool includes configuration parameters of physical channel resources such as a PSSCH, a PSCCH, and a physical sidelink feedback channel (physical sidelink feedback channel, PSFCH) in the resource pool.

Optionally, the base station sends the configuration information of the resource pool to the UE-A by using RRC signaling.

601d: The base station sends the configuration information of the resource pool to the UE-B.

Step 601d is similar to step 601c. For details, refer to related descriptions of step 601c.

It should be noted that there is no fixed execution sequence between step 601c and step 601d. Step 601c may be performed before step 601d, step 601d may be performed before step 601c, or step 601c and step 601d may be simultaneously performed depending on a situation. This is not specifically limited in this application.

Optionally, the base station may alternatively send the configuration information of the resource pool to the UE-A and the UE-B in a broadcast manner. This is not specifically limited in this application.

Optionally, the process shown in FIG. 6 further includes step 603. Step 603 may be performed after step 602.

603: The UE-A sends data to the UE-B on the data transmission resource.

Optionally, the process shown in FIG. 6 further includes step 604. Step 604 may be performed after step 603.

604: The UE-B sends a first feedback to the UE-A.

After the UE-B receives the data and successfully demodulates the data, the UE-B sends the first feedback to the UE-A. The first feedback is for feeding back that the UE-B successfully receives the data.

Optionally, the process shown in FIG. 6 further includes step 605. Step 605 may be performed after step 604.

605: The UE-A sends a second feedback to the base station.

The second feedback indicates that the data of the UE-A is successfully sent or is successfully received.

Specifically, after the UE-A receives the first feedback, the UE-A may feed back, to the base station, that the data of the UE-A is successfully sent or is successfully received. Optionally, the UE-A sends the second feedback to the base station through a PUCCH.

Therefore, it can be learned that, in a scenario in which the base station controls resource allocation in the sidelink communication system, the process in which the network device schedules the data transmission resource for the terminal device is currently specified. However, how to schedule the positioning reference signal resource for the terminal device is a problem worth considering.

This application provides a corresponding technical solution. The network device may schedule the positioning reference signal resource for the terminal device through a process similar to the process in which the network device schedules the data transmission resource for the terminal device, or may schedule a positioning reference signal for the terminal device by reusing the process in which the network device schedules the data transmission resource for the terminal device. This is not specifically limited in this application.

The terminal device may send both data and a positioning reference signal in the shared resource pool. Therefore, the network device may schedule the terminal device to send only a positioning reference signal, in other words, data is not sent in a slot scheduled by the network device for the terminal device. Alternatively, the network device may schedule the terminal device to send only data, in other words, a positioning reference signal is not sent in a slot scheduled by the network device for the terminal device. Alternatively, the network device may schedule the terminal device to send data and a positioning reference signal, in other words, data and a positioning reference signal are sent in a slot scheduled by the network device for the terminal device. The network device schedules a data transmission resource and/or a positioning reference signal resource for the terminal device by using DCI. Therefore, for details about how to design the DCI to enable the network device to schedule the terminal device to send only a positioning reference signal, send only data, or send data and a positioning reference signal, refer to related descriptions in the following embodiments.

Further, both a shared resource pool and a dedicated resource pool may be configured for the terminal device. When the network device schedules a resource for the terminal device, for details about how to select a resource in a corresponding resource pool for the terminal device, refer to related descriptions in the following embodiments.

In a data transmission resource scheduling process, the terminal device may send a data volume requirement of the terminal device to the network device. The network device schedules, for the terminal device with reference to the data volume requirement, a data transmission resource for carrying a corresponding volume of data. In a positioning reference signal resource scheduling process, for details about how the network device schedules a positioning reference signal resource for the terminal device, refer to related descriptions in the following embodiments.

In this application, optionally, the positioning reference signal is a sidelink positioning reference signal (sidelink positioning reference signal, SL-PRS). Data may be transmitted through a PSSCH.

In this application, in the following embodiments, a first request is merely an example of a name, and another name may alternatively be used. For example, the first request may be replaced with first information or a first indication. This is not specifically limited in this application. For example, that the first request is for requesting a positioning reference signal resource may alternatively be replaced with: The first information is for requesting a positioning reference signal resource.

In this application, in the following embodiments, the first request is further for requesting a data transmission resource. The first request is merely an example of a name, and another name may alternatively be used. For example, the first request may be replaced with the first information or the first indication. This is not specifically limited in this application. For example, the first request is replaced with the first information, and that the first request is further for requesting the data transmission resource may be replaced with: The first information indicates a volume of data to be transmitted by a first terminal device or data transmission buffer status information of the first terminal device.

In this application, in the following embodiments, a second request is merely an example of a name, and another name may alternatively be used. This is not specifically limited in this application. The second request may be replaced with second information, a second indication, or the like. This is not specifically limited in this application. For example, the second request is replaced with the second information. That the second request is for requesting a data transmission resource may be replaced with: The second information indicates a volume of data to be transmitted by the first terminal device or data transmission buffer status information of the first terminal device.

The following describes the technical solutions of this application with reference to specific embodiments.

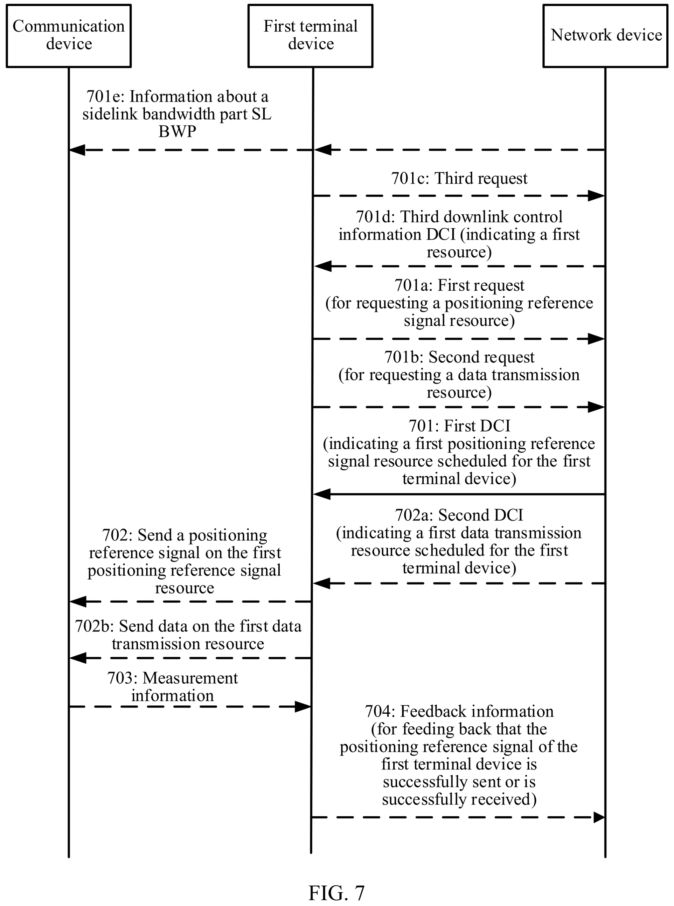

FIG. 7 is a diagram of an embodiment of a communication method according to embodiments of this application. Refer to FIG. 7. The method includes the following steps.

701: A network device sends first DCI to a first terminal device. The first DCI indicates a first positioning reference signal resource scheduled for the first terminal device. Correspondingly, the first terminal device receives the first DCI from the network device.

In other words, the first DCI is for scheduling the first positioning reference signal resource. Optionally, the first DCI is in Format 3_0.

In a possible implementation, the first DCI includes a resource pool index (resource pool index) field, and the resource pool index field indicates an index of a shared resource pool. It can be learned from the foregoing that the shared resource pool includes a data transmission resource and a positioning reference signal resource. In the shared resource pool, the first terminal device sends only a positioning reference signal, the first terminal device sends only data, or the first terminal device sends data and a positioning reference signal. It can be learned from step 701 that the first DCI indicates the first positioning reference signal resource scheduled for the first terminal device. It can be learned from this that the first terminal device may send a positioning reference signal in the shared resource pool. Optionally, the first terminal device sends data in the shared resource pool.

The following describes some possible implementations in which the first DCI indicates the first positioning reference signal resource scheduled for the first terminal device. This application is also applicable to another implementation. This is not specifically limited in this application.

Implementation 1: The first DCI includes a first field. When a value of the first field is a first value, the first field indicates the first terminal device to send only a positioning reference signal in a slot scheduled by using the first DCI; or when a value of the first field is a second value, the first field indicates the first terminal device to send data and a positioning reference signal in a slot scheduled by using the first DCI.

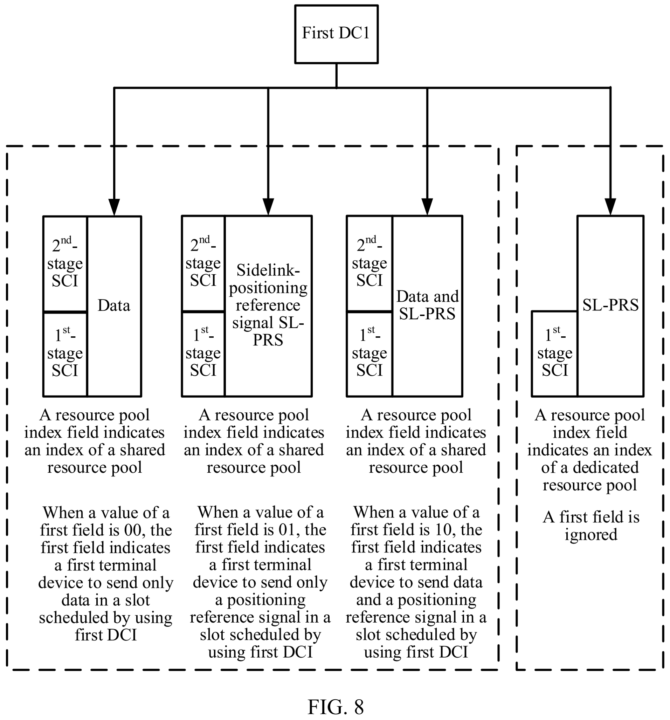

For example, as enumerated in Table 2 and shown in FIG. 8, when the value of the first field is 01, the first field indicates the first terminal device to send only a positioning reference signal in the slot scheduled by using the first DCI. For example, if one slot is scheduled by using the first DCI, the first field indicates the first terminal device to send only a positioning reference signal in the slot. For another example, if two slots are scheduled by using the first DCI, the first field indicates the first terminal device to send only a positioning reference signal in both the two slots.

For example, as enumerated in Table 2 and shown in FIG. 8, when the value of the first field is 10, the first field indicates the first terminal device to send data and a positioning reference signal in the slot scheduled by using the first DCI. For example, if one slot is scheduled by using the first DCI, the first field indicates the first terminal device to send data and a positioning reference signal in the slot. For another example, if three slots are scheduled by using the first DCI, the first field indicates the first terminal device to send data and a positioning reference signal in the three slots.

Table 2

| Value of the first field | Transmission mode in the slot scheduled by using the first DCI |
|---|---|
| 00 | Send only data |
| 01 | Send only a positioning reference signal |
| 10 | Send data and a positioning reference signal |

It should be understood that, in this implementation, because the first terminal device may send only data, send only a positioning reference signal, or send data and a positioning reference signal in the shared resource pool, at least 2 bits are needed to indicate the transmission mode of the first terminal device in the slot scheduled by using the first DCI. The transmission mode includes: The first terminal device sends only data, the first terminal device sends only a positioning reference signal, or the first terminal device sends data and a positioning reference signal. Therefore, a length of the first field may be greater than or equal to 2 bits.

It should be noted that the first DCI is described above by using an example in which the first DCI indicates the first positioning reference signal resource scheduled for the first terminal device. Optionally, if the first DCI indicates a first data transmission resource scheduled for the first terminal device, or the first DCI is for scheduling a first data transmission resource, when the value of the first field may be a sixth value, the first field indicates the first terminal device to send only data in the slot scheduled by using the first DCI. For example, as enumerated in Table 2 and shown in FIG. 8, if the value of the first field is 00, the first field indicates the first terminal device to send only data in the slot scheduled by using the first DCI. For example, if one slot is scheduled by using the first DCI, the first field indicates the first terminal device to send only data in the slot. For another example, if two slots are scheduled by using the first DCI, the first field indicates the first terminal device to send only data in the two slots.

The values of the first field and the meanings indicated by the values in Table 2 are merely examples, and do not constitute a limitation on this application. For example, when the value of the first field is 00, the first field indicates the first terminal device to send only a positioning reference signal in the slot scheduled by using the first DCI. Alternatively, when the value of the first field is 01, the first field indicates the first terminal device to send data and a positioning reference signal in the slot scheduled by using the first DCI. Optionally, if the first DCI indicates the first data transmission resource scheduled for the first terminal device, or the first DCI is for scheduling the first data transmission resource, when the value of the first field is 10, the first field indicates the first terminal device to send only data in the slot scheduled by using the first DCI.

In the foregoing implementation 1, the first field is described by using the slot granularity scheduled by using the first DCI as an example. During actual application, the first field may alternatively be described by using another time granularity scheduled by using the first DCI. For example, the first field indicates to send only a positioning reference signal or send data and a positioning reference signal on a time domain symbol scheduled by using the first DCI. This is not specifically limited in this application.

It can be learned from this that in the foregoing implementation 1, the first field is added to the first DCI, and the network device schedules the first positioning reference signal resource for the first terminal device by using the first field.

Optionally, the first field may be referred to as a sidelink positioning reference signal indicator (SL-PRS Indicator) field.

Implementation 2: The first DCI includes a second field. The second field indicates to send only a positioning reference signal resource, send only data, or send data and a positioning reference signal in each of one or more slots scheduled by using the first DCI.

The implementation 2 may be replaced with: The first DCI is for scheduling n slots, the first DCI includes a second field, and the second field indicates to send only a positioning reference signal, only data, or data and a positioning reference signal in a $1^{st}$ slot in the n slots, ..., send only a positioning reference signal, only data, or data and a positioning reference signal in an $i^{th}$ slot, ..., or send only a positioning reference signal, only data, or data and a positioning reference signal in an $n^{th}$ slot, where n is an integer greater than or equal to 1, and i is an integer greater than or equal to 2 and less than n.

For example, two slots are scheduled by using second DCI. There are three possible transmission modes in a $1^{st}$ slot in the two slots: The first terminal device may send only a positioning reference signal, send only data, or send data and a positioning reference signal in the $1^{st}$ slot. There are also three possible transmission modes in a $2^{nd}$ slot: The first terminal device may send only a positioning reference signal, send only data, or send data and a positioning reference signal in the $2^{nd}$ slot. Therefore, a length of the second field may be 4 bits, and different values of the 4 bits indicate a transmission mode in the $1^{st}$ slot and a transmission mode in the $2^{nd}$ slot. As enumerated in Table 3:

Table 3

| Value of the second field | Transmission mode in the $1^{st}$ slot and transmission mode in the $2^{nd}$ slot |
|---|---|
| 0000 | The first terminal device sends only a positioning reference signal in both the $1^{st}$ slot and the $2^{nd}$ slot |
| 0001 | The first terminal device sends only a positioning reference signal in the $1^{st}$ slot, and sends only data in the $2^{nd}$ slot |
| 0010 | The first terminal device sends only a positioning reference signal in the $1^{st}$ slot, and sends data and a positioning reference signal in the $2^{nd}$ slot |
| 0011 | The first terminal device sends data and a positioning reference signal in the $1^{st}$ slot, and sends only a positioning reference signal in the $2^{nd}$ slot |
| 0100 | The first terminal device sends data and a positioning reference signal in the $1^{st}$ slot, and sends only data in the $2^{nd}$ slot |
| 0101 | The first terminal device sends data and a positioning reference signal in the $1^{st}$ slot, and sends data and a positioning reference signal in the $2^{nd}$ slot |

(continued)

| Value of the second field | Transmission mode in the 1st slot and transmission mode in the 2nd slot |
|---|---|
| 0110 | The first terminal device sends data in the 1st slot, and sends only a positioning reference signal in the 2nd slot |
| 0111 | The first terminal device sends data in the 1st slot, and sends data and a positioning reference signal in the 2nd slot |
| 1000 | The first terminal device sends only data in the 1st slot, and sends only data in the 2nd slot |

The first DCI indicates the first positioning reference signal resource scheduled for the first terminal device. Therefore, the first terminal device sends a positioning reference signal in at least one slot scheduled by using the first DCI. Optionally, the first terminal device sends data in the at least one slot. Therefore, the value of the second field may be any one of 0000 to 0111 in Table 3.

It should be noted that the first DCI is described above by using an example in which the first DCI indicates the first positioning reference signal resource scheduled for the first terminal device. Optionally, if the first DCI indicates a first data transmission resource scheduled for the first terminal device, the value of the second field may be a sixth value, and the second field indicates the first terminal device to send only data in each of the one or more slots scheduled by using the first DCI. For example, as enumerated in Table 3, when two slots are scheduled by using the second DCI, and the value of the second field is 1000, the second field indicates the first terminal device to send only data in both the 1st slot and the 2nd slot.

It should be understood that in this implementation, because in the shared resource pool, the first terminal device may have three transmission modes in one slot scheduled by using the first DCI, and the three transmission modes include: the first terminal device sends only data in the slot, the first terminal device sends only a positioning reference signal in the slot, or the first terminal device sends data and a positioning reference signal in the slot, optionally, the length of the second field is determined based on a number of transmission modes of the first terminal device in one slot and a number of slots scheduled by using the first DCI. For example, the first terminal device includes three transmission modes in one slot, and the number of slots scheduled by using the first DCI is 2. Therefore, the length of the second field may be greater than or equal to 4 bits. For another example, if the first terminal device includes three transmission modes in one slot, and the number of slots scheduled by using the first DCI is 3, the length of the second field may be greater than or equal to 5 bits.

In the foregoing implementation 2, the second field is described by using the slot granularity scheduled by using the first DCI as an example. During actual application, the second field may alternatively be described by using another time granularity scheduled by using the first DCI. For example, the second field indicates to send only a positioning reference signal, send only data, or send data and a positioning reference signal on a time domain symbol scheduled by using the first DCI. This is not specifically limited in this application. It should be noted that in this implementation, optionally, the length of the second field may be determined with reference to a number of transmission modes of the first terminal device on one time domain symbol and a number of time domain symbols scheduled by using the first DCI.

Optionally, the second field may be referred to as a sidelink positioning reference signal indicator field.

It can be learned from this that in the foregoing implementation 2, the second field is added to the first DCI, and the network device schedules the first positioning reference signal resource for the first terminal device by using the second field.

Implementation 3: The first DCI includes a plurality of third fields, and the plurality of third fields correspond to a plurality of slots scheduled by using the first DCI. When a value of a third field in the plurality of third fields is a third value, the third field indicates the first terminal device to send only a positioning reference signal in a slot corresponding to the third field; when a value of a third field in the plurality of third fields is a fourth value, the third field indicates the first terminal device to send only data in a slot corresponding to the third field; or when a value of a third field in the plurality of third fields is a fifth value, the third field indicates the first terminal device to send data and a positioning reference signal in a slot corresponding to the third field.

In a possible implementation, the plurality of third fields one-to-one correspond to the plurality of slots, in other words, one third field corresponds to one slot, and different third fields correspond to different slots.

For example, for a third field, Table 4 enumerates various values of the third field and meanings correspondingly indicated by the values.

Table 4

| Value of the third field | Transmission mode in a slot corresponding to the third field |
|---|---|
| 00 | Send only a positioning reference signal |

(continued)

| Value of the third field | Transmission mode in a slot corresponding to the third field |
|---|---|
| 01 | Send only data |
| 10 | Send data and a positioning reference signal |

As enumerated in Table 4, when a value of a third field is 00, the third field indicates the first terminal device to send only a positioning reference signal in a slot corresponding to the third field. Alternatively, when a value of a third field is 01, the third field indicates the first terminal device to send only data in a slot corresponding to the third field. Alternatively, when a value of a third field is 10, the third field indicates the first terminal device to send data and a positioning reference signal in a slot corresponding to the third field.

For example, two slots are scheduled by using the first DCI, the first DCI includes two third fields, a $1^{st}$ third field corresponds to a $1^{st}$ slot, and a $2^{nd}$ third field corresponds to a $2^{nd}$ slot. When a value of the $1^{st}$ third field is 00, the $1^{st}$ third field indicates to send only a positioning reference signal in the $1^{st}$ slot. When a value of the $2^{nd}$ third field is 10, the $2^{nd}$ third field indicates to send data and a positioning reference signal in the $2^{nd}$ slot.

It should be noted that Table 4 is merely an example, and does not constitute any limitation on this application. During actual application, various values of the third field and meanings correspondingly indicated by the values may alternatively be represented in other manners. For example, Table 5 enumerates various values of the third field and meanings correspondingly indicated by the values.

Table 5

| Value of the third field | Transmission mode in a slot corresponding to the third field |
|---|---|
| 01 | Send only data |
| 10 | Send only a positioning reference signal |
| 11 | Send data and a positioning reference signal |

It should be noted that in this implementation, the first DCI indicates the first positioning reference signal resource scheduled for the first terminal device. Therefore, a value of at least one third field in the plurality of third fields indicates to send only a positioning reference signal or send data and a positioning reference signal in a slot corresponding to the at least one third field.

Optionally, because in the shared resource pool, the first terminal device includes three transmission modes in one slot scheduled by using the first DCI, and each slot corresponds to one third field, a length of the third field may be greater than or equal to 2 bits. In this way, a transmission mode of the first terminal device in a slot corresponding to a third field is indicated by a value of the third field.

In another possible implementation, one third field in the plurality of third fields corresponds to a plurality of slots, and each third field corresponds to a distinct plurality of slots.

For various values of the third field and meanings correspondingly indicated by the values, refer to related examples enumerated in Table 3 or Table 4.

For example, four slots are scheduled by using the first DCI, and the first DCI includes two third fields. A $1^{st}$ third field corresponds to a $1^{st}$ slot and a $2^{nd}$ slot, and a $2^{nd}$ third field corresponds to a $3^{rd}$ slot and a $4^{th}$ slot. For example, when the $1^{st}$ third field is 10, the $1^{st}$ third field indicates to send data and a positioning reference signal in both the $1^{st}$ slot and the $2^{nd}$ slot. When a value of the $2^{nd}$ third field is 01, the $2^{nd}$ third field indicates to send only a positioning reference signal in the $3^{rd}$ slot and the $4^{th}$ slot. Alternatively, when a value of the $1^{st}$ third field is 01, the $1^{st}$ third field indicates to send only data in the $1^{st}$ slot and the $2^{nd}$ slot. When a value of the $2^{nd}$ third field is 10, the $2^{nd}$ third field indicates to send data and a positioning reference signal in both the $3^{rd}$ slot and the $4^{th}$ slot.

It should be noted that in this implementation, the first DCI indicates the first positioning reference signal resource scheduled for the first terminal device. Therefore, a value of at least one third field in the plurality of third fields indicates the first terminal device to send only a positioning reference signal or send data and a positioning reference signal in a slot corresponding to the at least one third field.

Optionally, because in the shared resource pool, the first terminal device includes three transmission modes in each slot scheduled by using the first DCI, and a transmission mode in one or more slots corresponding to each third field is the same, a length of the third field may be greater than or equal to 2 bits. In this way, a transmission mode of the first terminal device in a slot corresponding to a third field is indicated by a value of the third field.

Optionally, the plurality of third fields are included in a sidelink positioning reference signal indicator field in the first DCI.

It can be learned from this that in the foregoing implementation 3, the plurality of third fields are added to the first DCI, and the network device schedules the first positioning reference signal resource for the first terminal device by using the plurality of third fields.

Implementation 4: The first DCI includes a seventh field and/or an eighth field. The seventh field indicates that sending only a positioning reference signal in a slot scheduled by using the first DCI is not allowed by default. When a value of the eighth field is a seventh value, the eighth field indicates the first terminal device to send a positioning reference signal and data in the slot scheduled by using the first DCI.

Optionally, a length of the seventh field may be 1 bit. For example, if a value of the seventh field is 1, the seventh field indicates that sending only a positioning reference signal in the slot scheduled by using the first DCI is not allowed by default. Alternatively, if a value of the seventh field is 0, the seventh field indicates that sending only a positioning reference signal in the slot scheduled by using the first DCI is not allowed by default.

For example, a length of the eighth field is 1 bit. As enumerated in Table 6, when the value of the first field is 1, the first terminal device is indicated to send a positioning reference signal and data in the slot scheduled by using the first DCI.

Table 6

| Value of the eighth field | Transmission mode in the slot scheduled by using the first DCI |
|---|---|
| 0 | Send only data |
| 1 | Send data and a positioning reference signal |

It should be noted that the first DCI is described above by using an example in which the first DCI indicates the first positioning reference signal resource scheduled for the first terminal device. Optionally, if the first DCI indicates a first data transmission resource scheduled for the first terminal device, or if only data is sent in the slot scheduled by using the first DCI, when the value of the eighth field is an eighth value, the eighth field indicates the first terminal device to send only data in the slot scheduled by using the first DCI. For example, as enumerated in Table 6, when the value of the eighth field is 0, the eighth field indicates the first terminal device to send only data in the slot scheduled by using the first DCI.

The values of the eighth field and the meanings indicated by the values in Table 6 are merely examples, and do not constitute a limitation on this application. For example, when the value of the eighth field is 1, the eighth field indicates the first terminal device to send only data in the slot scheduled by using the first DCI. When the value of the eighth field is 0, the eighth field indicates the first terminal device to send data and a positioning reference signal in the slot scheduled by using the first DCI.

Implementation 5: The first DCI includes a ninth field. When a value of the ninth field is a ninth value, the ninth field indicates the first terminal device to send only a positioning reference signal in a slot scheduled by using the first DCI; or when a value of the ninth field is a tenth value, the ninth field indicates the first terminal device to send a positioning reference signal and data in a slot scheduled by using the first DCI.

Optionally, a length of the ninth field is 1 bit. For example, as enumerated in Table 7, when the value of the ninth field is 0, the ninth field indicates the first terminal device to send only a positioning reference signal in the slot scheduled by using the first DCI. When the value of the ninth field is 1, the ninth field indicates the first terminal device to send a positioning reference signal and data in the slot scheduled by using the first DCI.

Table 7

| Value of the ninth field | Transmission mode in the slot scheduled by using the first DCI |
|---|---|
| 0 | Send only a positioning reference signal |
| 1 | Send data and a positioning reference signal |

The values of the ninth field and the meanings indicated by the values in Table 7 are merely examples, and do not constitute a limitation on this application. For example, when the value of the ninth field is 1, the ninth field indicates the first terminal device to send only a positioning reference signal in the slot scheduled by using the first DCI. When the value of the ninth field is 0, the ninth field indicates the first terminal device to send data and a positioning reference signal in the slot scheduled by using the first DCI.

In another possible implementation, the first DCI includes a fourth field, and the fourth field indicates an index of a dedicated resource pool. The first positioning reference signal resource belongs to the dedicated resource pool. The fourth field may be understood as a resource pool index field.

It can be learned from the foregoing descriptions that the first terminal device may send a positioning reference signal but cannot send data in the dedicated resource pool. In this implementation, the fourth field indicates the index of the dedicated resource pool, and the first terminal device may ignore the sidelink positioning reference signal indicator field in the first DCI. The first terminal device sends, by default, only a positioning reference signal in the slot scheduled by using the first DCI.

Optionally, in step 701, the first DCI further includes a fifth field. The fifth field indicates the first positioning reference signal resource scheduled for the first terminal device, or the fifth field indicates the positioning reference signal resource scheduled by using the first DCI. For example, a value of the fifth field indicates an index of the first positioning reference signal resource.

The following describes some possible implementations of the fifth field.

Implementation 1: The fifth field indicates an identity (identity, ID) of the positioning reference signal resource scheduled by using the first DCI.

In the implementation 1, a length of the fifth field meets the following condition: $k * \left\lceil \log_2(ID_{max}) \right\rceil$.

$\left\lceil \log_2(ID_{max}) \right\rceil$ indicates rounding of $\log_2(ID_{max})$. k is a number of positioning reference signal resources scheduled by using the first DCI. $ID_{max}$ is an ID of a positioning reference signal resource with a maximum ID in the resource pool.

Implementation 2: The fifth field indicates a ranking number of each positioning reference signal resource in positioning reference signal resources scheduled by using the first DCI in preconfigured positioning reference signal resources in a slot in which the positioning reference signal resource is located, or the fifth field indicates a ranking number of each positioning reference signal resource in positioning reference signal resources scheduled by using the first DCI in preconfigured positioning reference signal resources in the resource pool to which the positioning reference signal resource scheduled by using the first DCI belongs.

In the implementation 2, optionally, a length of the fifth field meets the following condition: $k * \left\lceil \log_2 N \right\rceil$.

$\left\lceil \log_2 N \right\rceil$ indicates rounding of $\log_2 N$, where the rounding includes a round-off operation, a round-up operation, or a round-down operation. k is a number of positioning reference signal resources scheduled by using the first DCI. N is a number of preconfigured positioning reference signal resources in each slot, or is a ranking number of a positioning reference signal resource with a maximum ranking number in each slot. For example, a positioning reference signal resource 1 and a positioning reference signal resource 2 are scheduled by using the first DCI. The positioning reference signal resource 1 is in a slot 1. Four positioning reference signal resources are preconfigured in the slot 1, and a ranking number of the positioning reference signal resource 1 in the four positioning reference signal resources is 1. The positioning reference signal resource 2 is in a slot 2. Four positioning reference signal resources are preconfigured in the slot 2, and a ranking number of the positioning reference signal resource 2 in the four positioning reference signal resources is 2. Therefore, it can be learned that N is 4, and k is 2, to be specific, the length of the fifth field is 4 bits, and the value of the fifth field is 0110.

In the implementation 2, optionally, a length of the fifth field meets the following condition: $\left\lceil \log_2 N^k \right\rceil$.

$\left\lceil \log_2 N^k \right\rceil$ indicates rounding of $\log_2 N^k$. k is a number of positioning reference signal resources scheduled by using the first DCI. N is a number of preconfigured positioning reference signal resources in each slot, a ranking number of a positioning reference signal resource with a maximum ranking number in each slot, or a number of preconfigured positioning reference signal resources in the resource pool. For example, a positioning reference signal resource 1 in a slot 1 and a positioning reference signal resource 2 in a slot 2 are scheduled by using the first DCI. Four positioning reference signal resources are preconfigured in each slot. Therefore, it can be learned that N is 4, and k is 2. Therefore, the length of the fifth field is 4 bits. Further, optionally, the length of the fifth field meets the following condition: $\left\lceil \log_2 N^k \right\rceil + a$ or

$$b * \left\lceil \log_2 N^k \right\rceil + a$$

. a may be any real number. For example, a may be 0. b is an integer greater than 0. For example, b=1.

Optionally, the embodiment shown in FIG. 7 further includes step 701a. Step 701a may be performed before step 701.

701a: The first terminal device sends a first request to the network device. The first request is for requesting a positioning reference signal resource. Correspondingly, the network device receives the first request from the first terminal device.

Optionally, the first request includes at least one of the following:

1. Bandwidth of the positioning reference signal resource requested by the first terminal device
Specifically, the first terminal device indicates, by using the first request, the bandwidth of a positioning reference signal requested by the first terminal device. This helps the network device allocate a positioning reference signal resource of the corresponding bandwidth to the first terminal device with reference to the bandwidth.

2. Number of time domain symbols occupied by the positioning reference signal resource requested by the first terminal device
In this implementation, the first terminal device reports the number of time domain symbols occupied by the requested positioning reference signal resource. This facilitates adaptation to a movement speed of the first terminal device. For example, the movement speed is high, and coherence time is short. Therefore, a number of time domain symbols usable for coherent combining is small.

3. Comb size (comb Size) of the positioning reference signal resource requested by the first terminal device: It should be noted that the English translation corresponding to the comb size is merely used as an example, and another translation with an equivalent explanation may alternatively be used. This is not specifically limited in this application.

4. Frequency domain offset (offset) of the positioning reference signal resource requested by the first terminal device: It should be noted that the English translation corresponding to the frequency domain offset is merely used as an example, and another translation with an equivalent explanation may alternatively be used. This is not specifically limited in this application.

Optionally, the third item and the fourth item may be determined and requested by the first terminal device based on a capability of the first terminal device.

5. Start time domain symbol (start symbol or symbol of a first PRS) occupied by the positioning reference signal resource requested by the first terminal device: It should be noted that the English translation corresponding to the start time domain symbol occupied by the positioning reference signal resource is merely used as an example, and another translation with an equivalent explanation may alternatively be used. This is not specifically limited in this application.

Optionally, the first terminal device determines, based on load of data and a position of demodulation reference information (demodulation reference signal, DMRS) in a slot, the start time domain symbol occupied by the positioning reference signal resource requested by the first terminal device, to help avoid collision with the DMRS.

6. Number of time domain symbols (length of PRS symbols or symbol length) occupied by the positioning reference signal resource requested by the first terminal device: It should be noted that the English translation corresponding to the number of time domain symbols occupied by the positioning reference signal resource is merely used as an example, and another translation with an equivalent explanation may alternatively be used. This is not specifically limited in this application.

7. Number of positioning reference signal resources (number of PRS resources) requested by the first terminal device: It should be noted that the English translation corresponding to the number of positioning reference signal resources is merely used as an example, and another translation with an equivalent explanation may alternatively be used. This is not specifically limited in this application.

Optionally, the first terminal device determines, according to a positioning method, the number of positioning reference signal resources requested by the first terminal device. Different numbers of transmission times of a positioning reference signal are needed for different positioning methods. For example, for a time difference of arrival (time difference of arrival, TDOA) positioning method, a number of transmission times of a positioning reference signal is 1. Therefore, the first terminal device may request one positioning reference signal resource. For a round-trip time (round-trip time, RTT) positioning method, a number of transmission times of a positioning reference signal is 2. Therefore, the first terminal device may request two positioning reference signal resources. Alternatively, optionally, the first terminal device determines, based on quality of service for positioning, the number of positioning reference signal resources requested by the first terminal device. Different numbers of transmission times of a positioning reference signal are needed for different quality of service for positioning.

8. Time interval (time interval) between time domain positions occupied by a plurality of positioning reference signal resources requested by the first terminal device: It should be noted that the English translation corresponding to the time interval is merely used as an example, and another translation with an equivalent explanation may alternatively be used. This is not specifically limited in this application.

Optionally, the first terminal device determines, based on the capability of the first terminal device and a resource load status in a communication system, the time interval between the time domain positions occupied by the plurality of positioning reference signal resources requested by the first terminal device.

9. First indication information: The first indication information indicates a resource pool to which the positioning reference signal resource requested by the first terminal device belongs.

Specifically, the first terminal device indicates, by using the first indication information, the resource pool to which the positioning reference signal resource requested by the first terminal device belongs. This helps the network device select the corresponding first positioning reference signal resource for the first terminal device from the resource pool indicated by the first indication information, and allocate the first positioning reference signal resource to the first terminal device. Optionally, the first terminal device determines the first indication information based on data complexity of the first terminal device and capability information of the first terminal device. For example, it is determined whether the first terminal device supports simultaneous transmission of data and a positioning reference. If the first terminal device supports the simultaneous transmission of data and a positioning reference, the first terminal device may indicate a request for a positioning reference signal resource in the shared resource pool by using the first indication information. If the first terminal device does not support the simultaneous transmission of data and a positioning reference, the first terminal device may indicate a request for a positioning reference signal resource in the dedicated resource pool by using the first indication information.

10. Second indication information: The second indication information indicates the positioning reference signal resource requested by the first terminal device. For example, the second indication information indicates an index of the positioning reference signal resource requested by the first terminal device.

11. Third indication information: The third indication information indicates that the first terminal device requests the positioning reference signal resource.

For example, a length of the third indication information is 1 bit. When a value of the third indication information is 0, it indicates that the first terminal device requests the positioning reference signal resource. Alternatively, when a value of the third indication information is 1, it indicates that the first terminal device requests a positioning reference signal.

It should be noted that, optionally, if the first request is for requesting the positioning reference signal resource and/or a data transmission resource, the third indication information indicates whether the first terminal device requests the positioning reference signal resource. For example, when the value of the third indication information is 0, it indicates that the first terminal device does not request the positioning reference signal resource. In this case, it may be understood that the first request is for requesting the data transmission resource. When the value of the third indication information is 1, it indicates that the first terminal device requests the positioning reference signal resource. In this case, it may be understood that the first request is for requesting the positioning reference signal resource. Optionally, the first request is further for requesting the data transmission resource. Alternatively, when the value of the third indication information is 1, it indicates that the first terminal device requests the positioning reference signal resource; or when the value of the third indication information is 0, it indicates that the first terminal device does not request the positioning reference signal resource.

The following provides examples of some implementations of content included in the first request.

Implementation 1: The first request includes the bandwidth of the positioning reference signal resource requested by the first terminal device and the number of positioning reference signal resources requested by the first terminal device. This helps the first terminal device request, from the network device, the positioning reference signal resource of the corresponding bandwidth and the corresponding number of positioning reference signal resources. In this way, the network device allocates an appropriate positioning reference signal resource to the first terminal device, to help improve resource utilization and positioning precision.

Implementation 2: The first request includes the bandwidth of the positioning reference signal resource requested by the first terminal device and the first indication information. In this way, the first terminal device requests, from the network device, a positioning reference signal resource of the corresponding bandwidth in the resource pool indicated by the first indication information, to help the network device allocate an appropriate positioning reference signal resource to the first terminal device in the appropriate resource pool, and avoid low system resource utilization and uncertainty of positioning performance that are caused by allocating a positioning reference signal resource to the first terminal device by the network device through blind scheduling. Therefore, in this application, the system resource utilization can be improved and the positioning performance can be ensured while a problem of scheduling a positioning reference signal resource is resolved.

Implementation 3: The first request includes the bandwidth of the positioning reference signal resource requested by the first terminal device, the number of positioning reference signal resources requested by the first terminal device, and the first indication information. In this way, the network device selects, for the first terminal device, a positioning reference signal resource of the corresponding bandwidth and the corresponding number of positioning reference signal resources from the resource pool indicated by the first indication information.

Implementation 4: The first request includes the bandwidth of the positioning reference signal resource requested by the first terminal device, the number of positioning reference signal resources requested by the first terminal device, and another optional parameter. For example, the another optional parameter may be the comb size and/or the frequency domain offset of the positioning reference signal resource requested by the first terminal device.

Implementation 5: The first request includes the second indication information. In this way, the first terminal device requests, from the network device, the positioning reference signal resource indicated by the second indication information, to help the network device allocate a corresponding positioning reference signal resource to the first terminal device.

Implementation 6: The first request includes the third indication information. In this way, the first terminal device requests the positioning reference signal resource from the network device, to help reduce overheads caused by the request.

Implementation 7: The first request includes one of the parameters for the positioning reference signal resource requested by the first terminal device. For example, the first request includes the bandwidth, the comb size, or the frequency domain offset of the positioning reference signal resource requested by the first terminal device.

Optionally, the first request is carried in a MAC CE or RRC signaling. For example, the first request may be an SL-PRS requested characteristic (SL-PRS requested characteristic).

Optionally, the first terminal device further requests the data transmission resource. The following provides two possible requesting manners.

Implementation 1: The first request is further for requesting the data transmission resource.

In this implementation, the first terminal device requests the data transmission resource and the positioning reference signal resource from the network device by using the first request. The first terminal device reuses an existing request for the data transmission resource, to avoid a great improvement on a communication protocol, and help improve practicability of this solution. Optionally, the first request is carried in the MAC CE. The first request includes the third indication information, and the third indication information indicates that the first terminal device requests the positioning reference signal resource.

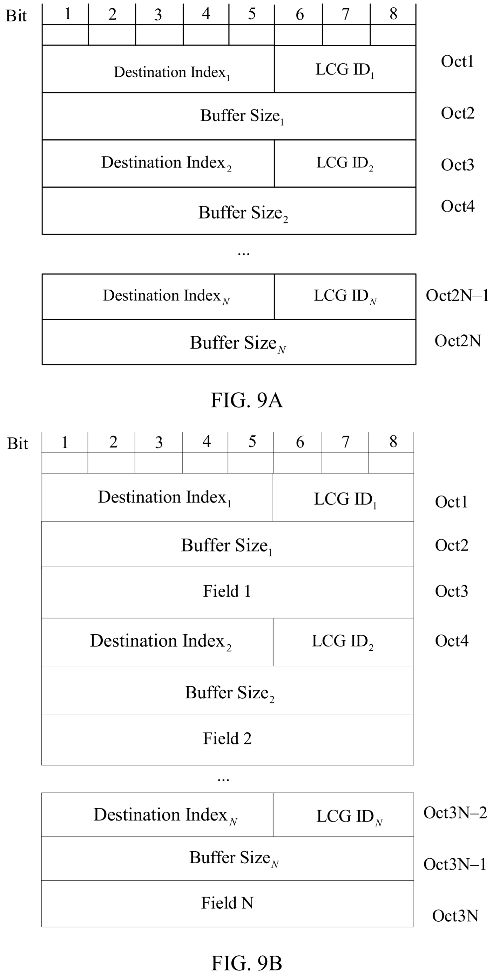

In a possible implementation, a format of the MAC CE may be shown in FIG. 9A. A Destination Index$_1$ (Destination Index1) field indicates an index of a 1$^{st}$ device for which the first terminal device requests the data transmission resource and/or the positioning reference signal resource. The third indication information may be a Buffer Size$_1$ (Buffer Size1) field in the MAC CE shown in FIG. 9A. For example, when a value of the Buffer Size$_1$ field may be a reserved value or a specific value that is predefined, the Buffer Size$_1$ field indicates that the first terminal device requests a positioning reference signal resource. There may be one or more reserved values. For example, if the value of the Buffer Size$_1$ field is 11111111, the Buffer Size$_1$ field indicates that the first terminal device requests the positioning reference signal resource, where the positioning reference signal resource is for transmission of a positioning reference signal between the first terminal device and the device corresponding to Destination Index$_1$. In other words, the third indication information is a buffer size field in the MAC CE, or the MAC CE includes a buffer size field. When a value of the buffer size field is a reserved value or a specific value that is predefined, the buffer size field indicates that the first terminal device requests the positioning reference signal resource. A case of another device for which the first terminal device requests the data transmission resource and/or the positioning reference signal resource is similar. For example, a Destination Index$_N$ (Destination IndexN) field indicates an index of an N$^{th}$ device for which the first terminal device requests the data transmission resource and/or the positioning reference signal resource. A value of a Buffer Size$_N$ (Buffer SizeN) field indicates whether the first terminal device requests a positioning reference signal resource for transmission of a positioning reference signal between the first terminal device and the N$^{th}$ device. For example, when the value of the Buffer Size$_N$ field is a reserved value or a specific value that is predefined, the Buffer Size$_N$ field indicates that the first terminal device requests the positioning reference signal resource. There may be one or more reserved values.

In another possible implementation, a format of the MAC CE may be shown in FIG. 9B. A Destination Index$_1$ (Destination Index1) field indicates an index of a 1$^{st}$ device for which the first terminal device requests the data transmission resource and/or the positioning reference signal resource. A field 1 is newly added to the MAC CE, and the third indication information is the field 1. A value of the field 1 indicates that the first terminal device requests a positioning reference signal resource, and the positioning reference signal resource is for transmission of a positioning reference signal between the first terminal device and the device indicated by the Destination Index$_1$ field. A case of another device for which the first terminal device requests the data transmission resource and/or the positioning reference signal resource is similar. A field 2 corresponds to a Destination Index$_2$ field, and a field 3 corresponds to a Destination Index$_3$ field. By analogy, a field N corresponds to a Destination Index$_N$ field. For example, the Destination Index$_N$ (Destination Index2) field indicates an index of an N$^{th}$ device for which the first terminal device requests the data transmission resource and/or the positioning reference signal resource. The field N is newly added to the MAC CE. The field N indicates whether the first terminal device requests a positioning reference signal resource, and the positioning reference signal resource is for transmission of a positioning reference signal between the first terminal device and the device indicated by the Destination Index$_N$ field. In other words, the MAC CE includes a tenth field, and the tenth field indicates that the first terminal device requests the positioning reference signal resource. For example, the tenth field may be the field 1 shown in FIG. 9B.

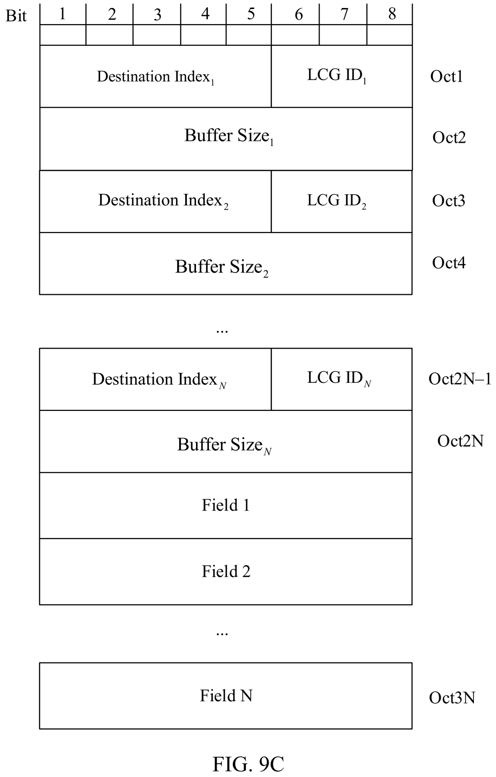

It should be noted that the format of the MAC CE shown in FIG. 9B is merely an example. During actual application, the format of the MAC CE may alternatively be shown in FIG. 9C, and a field 1 to a field N are in Oct2N+1 to Oct3N in the MAC CE. The field 1 corresponds to a Destination Index$_1$ field, and the field 2 corresponds to a Destination Index$_2$ field. By analogy, the field N corresponds to a Destination Index$_N$ field.

It should be noted that, in the MAC CEs shown in FIG. 9B and FIG. 9C, a length of each of the field 1 to the field N newly added to the MAC CE is 8 bits. During actual application, the length of each field is not limited. For example, the length of each field may be 1 bit, 2 bits, or 3 bits. This is not specifically limited in this application.

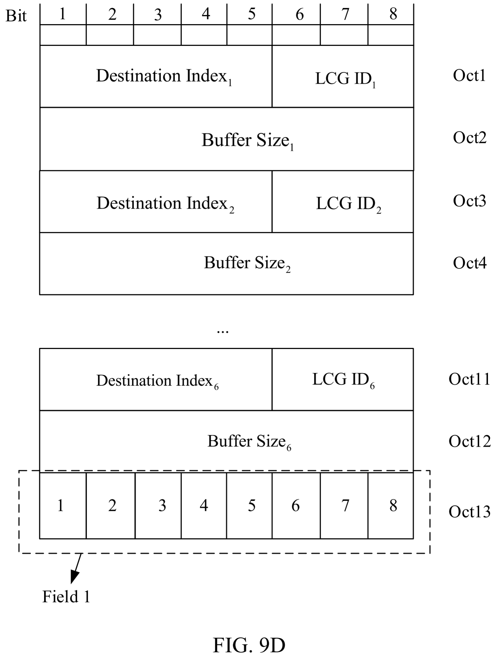

The following further provides another possible format of the MAC CE. For example, as shown in FIG. 9D, a Destination Index$_1$ (Destination Index1) field indicates an index of a 1st device for which the first terminal device requests the data transmission resource and/or the positioning reference signal resource. A Destination Index$_2$ field indicates an index of a 2nd device for which the first terminal device requests the data transmission resource and/or the positioning reference signal resource. By analogy, a Destination Index$_6$ field indicates an index of a 6th device for which the first terminal device requests the data transmission resource and/or the positioning reference signal resource. The MAC CE includes a field 1, and a 1st bit of the field 1 indicates whether the first terminal device requests a positioning reference signal resource for transmission of a positioning reference signal between the first terminal device and the 1st device. For example, when a value of the 1st bit of the field 1 is 0, the 1st bit indicates that the first terminal device requests the positioning reference signal resource for the transmission of the positioning reference signal between the first terminal device and the 1st device. When a value of the 1st bit of the field 1 is 1, the 1st bit indicates that the first terminal device does not request the positioning reference signal resource for the transmission of the positioning reference signal between the first terminal device and the 1st device. A 2nd bit of the field 1 indicates whether the first terminal device requests a positioning reference signal resource for transmission of a positioning reference signal between the first terminal device and the 2nd device. By analogy, a 6th bit of the field 1 indicates whether the first terminal device requests a positioning reference signal resource for transmission of a positioning reference signal between the first terminal device and the 6th device. A 7th bit and an 8th bit of the field 1 may be respectively used as reserved bits. It can be learned from this that the MAC CE includes an eleventh field, and a bit of the eleventh field is associated with a device with a corresponding destination address. For example, one bit of the eleventh field is associated with a device with one destination address, and different bits are associated with devices with different destination addresses. The bit indicates whether the first terminal device requests a positioning reference signal resource for transmission of a positioning reference signal between the first terminal device and the device with the destination address associated with the bit.

Implementation 2: The following describes the implementation 2 with reference to step 701b.

Optionally, the embodiment shown in FIG. 7 further includes step 701b. Step 701b may be performed before step 701.

701b: The first terminal device sends a second request to the network device. The second request is for requesting the data transmission resource. Correspondingly, the network device receives the second request from the first terminal device.

Optionally, the second request is carried in a MAC CE or RRC signaling. The first request and the second request may be carried in same signaling or different signaling. This is not specifically limited in this application.

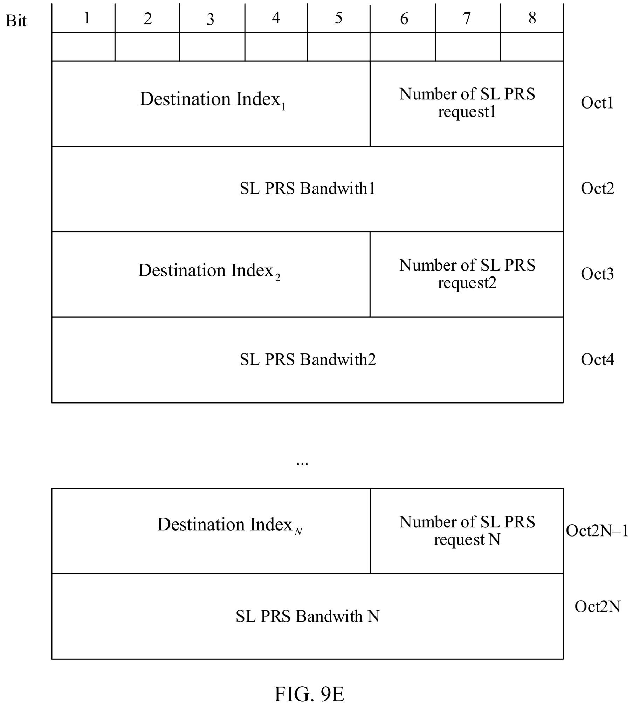

For example, the second request is carried in the MAC CE shown in FIG. 9A. The first request may be carried in a MAC CE shown in FIG. 9E. As shown in FIG. 9E, a Destination Index$_1$ (Destination Index1) field indicates an index of a 1st device for which the first terminal device requests the positioning reference signal resource. A number-of-requested-positioning-reference-signal-resources 1 (Number of SL PRS request1) field indicates a number of positioning reference signal resources requested by the first terminal device that are for transmission of a positioning reference signal between the first terminal device and the 1st device. A positioning reference signal bandwidth 1 (SL PRS Bandwith1) field indicates a bandwidth of a positioning reference signal resource that is requested by the first terminal device and that is for the transmission of the positioning reference signal between the first terminal device and the 1st device. Cases of other devices for which the first terminal device requests the positioning reference signal resource are similar, and details are not described herein one by one. In other words, the MAC CE includes a number-of-requested-positioning-reference-signal-resources field and a positioning reference signal bandwidth field. The number-of-requested-positioning-reference-signal-resources field indicates a number of positioning reference signal resources requested by the first terminal device. The positioning reference signal bandwidth field indicates a bandwidth of a positioning reference signal resource requested by the first terminal device. Optionally, a length of the positioning reference signal bandwidth field may be 5 bits, 6 bits, or 8 bits. Optionally, the length of the positioning reference signal bandwidth field is determined based on a system bandwidth and a reference signal resource bandwidth granularity. For example, a BWP has a bandwidth of 20 M (MHz), and includes 106 RBs in total. The bandwidth granularity of the positioning reference signal resource is 4 RBs, and a subcarrier spacing is 15 kHz (kilohertz). Therefore, the length of the positioning reference signal bandwidth field may be 5 bits. Alternatively, the length of the positioning reference signal bandwidth field is 1 bit or 2 bits, and the positioning reference signal bandwidth field indicates a large bandwidth or a small bandwidth. For example, when a value of the positioning reference signal bandwidth field is 1, the positioning reference signal bandwidth field indicates that the first terminal device requests the large bandwidth. When a value of the positioning reference signal bandwidth field is 0, the positioning reference signal bandwidth field indicates that the first terminal device requests the small bandwidth. Optionally, a length of the number-of-requested-positioning-reference-signal-resources field may be 2 bits or 3 bits. This is not specifically limited in this application. Therefore, the first terminal device performs quantized indication based on the system bandwidth, to effectively reduce signaling overheads.

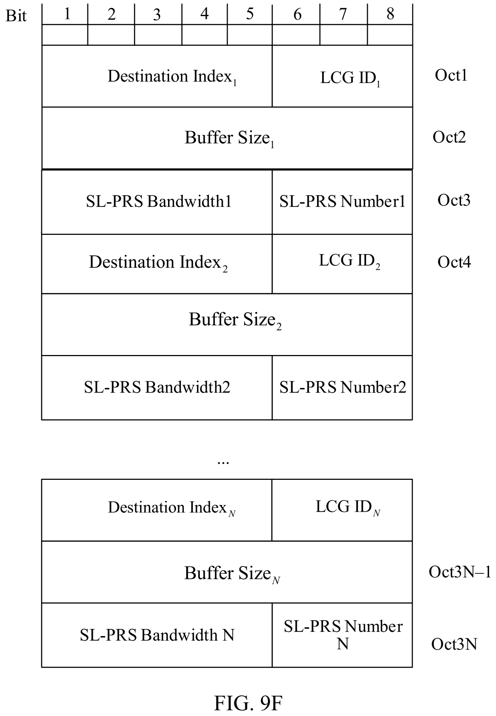

It should be noted that FIG. 9E is merely an example. During actual application, the MAC CE carrying the first request may alternatively be in another format. This is not specifically limited in this application. For example, the first request may be carried in a MAC CE shown in FIG. 9F. As shown in FIG. 9F, the MAC CE includes a Destination Index$_1$ field, a number-of-requested-positioning-reference-signal-resources 1 field, and a positioning reference signal bandwidth 1 field. The Destination Index$_1$ field indicates an index of a 1$^{st}$ device for which the first terminal device requests the positioning reference signal resource. The number-of-requested-positioning-reference-signal-resources 1 field indicates a number of positioning reference signal resources requested by the first terminal device that are for transmission of a positioning reference signal between the first terminal device and the 1$^{st}$ device. The positioning reference signal bandwidth 1 field indicates a bandwidth of a positioning reference signal resource that is requested by the first terminal device and that is for the transmission of the positioning reference signal between the first terminal device and the 1$^{st}$ device. Cases of other devices for which the first terminal device requests the positioning reference signal resource are similar, and details are not described herein one by one. In other words, a number-of-requested-positioning-reference-signal-resources field and a positioning reference signal bandwidth field are newly added to or included in an SL-BSR MAC CE. The number-of-requested-positioning-reference-signal-resources field indicates a number of positioning reference signal resources requested by the first terminal device. The positioning reference signal bandwidth field indicates a bandwidth of a positioning reference signal resource requested by the first terminal device. Optionally, a length of the number-of-requested-positioning-reference-signal-resources field may be 3 bits. A length of the positioning reference signal bandwidth field may be 5 bits. Alternatively, a length of the number-of-requested-positioning-reference-signal-resources field may be 2 bits, and a length of the positioning reference signal bandwidth field may be 6 bits, to indicate a request for up to three positioning reference signal resources and 64 segments of positioning reference signal resources occupying different frequency bands.

It should be noted that there is no fixed execution sequence between step 701a and step 701b. Step 701a may be performed before step 701b, step 701b may be performed before step 701a, or step 701a and step 701b may be simultaneously performed depending on a situation. This is not specifically limited in this application.

Optionally, the network device may schedule a data transmission resource for the first terminal device in the following two possible manners.

Implementation 1: The first DCI further indicates a first data transmission resource scheduled for the first terminal device. Alternatively, the first DCI is further for scheduling a first data transmission resource.

Implementation 2: The following describes the implementation 2 with reference to step 702a.

Optionally, the embodiment shown in FIG. 7 further includes step 702a. Step 702a may be performed after step 701b.

702a: The network device sends second DCI to the first terminal device. The second DCI indicates the first data transmission resource scheduled for the first terminal device. Correspondingly, the first terminal device receives the second DCI from the network device.

In other words, the second DCI is for scheduling the first data transmission resource.

An implementation in which the second DCI indicates the first data transmission resource scheduled for the first terminal device is similar to the implementation in which the first DCI indicates the first positioning reference signal resource scheduled for the first terminal device. For details, refer to the foregoing related descriptions. For example, in a possible implementation, the second DCI includes a sixth field. When a value of the sixth field is a sixth value, the sixth field indicates the first terminal device to send only data in a slot scheduled by using the second DCI. For example, when the value of the sixth field is 10, the sixth field indicates the first terminal device to send only data in the slot scheduled by using the second DCI.

In the implementation 2, step 701b may be performed before step 702a. There is no fixed execution sequence between step 701b and step 701. Step 701b may be performed before step 701, step 701 may be performed before step 701b, or step 701b and step 701 may be simultaneously performed depending on a situation. This is not specifically limited in this application.

Optionally, the embodiment shown in FIG. 7 further includes step 701c and step 701d. Step 701c and step 701d may be performed before step 701a. If the embodiment shown in FIG. 7 further includes step 701b, step 701c is performed before step 701a and step 701b.

701c: The first terminal device sends a third request to the network device. Correspondingly, the network device receives the third request from the first terminal device.

The third request is for notifying the network device that the first terminal device is to send a positioning reference signal. Optionally, the third request is for notifying the network device that the first terminal device is to send data.

Optionally, the third request may be a resource scheduling request, and the resource scheduling request is for notifying the network device that the first terminal device is to send data. The first terminal device reuses the resource scheduling request to notify the network device that the first terminal device is to send a positioning reference signal.

701d: The network device sends third DCI to the first terminal device. The third DCI indicates a first resource. Correspondingly, the first terminal device receives the third DCI from the network device.

The first resource is for sending the first request. Optionally, if the embodiment shown in FIG. 7 further includes step 701b, the first resource is further for sending the second request.

Optionally, based on step 701d, step 701a specifically includes: The first terminal device sends the first request to the network device through the first resource.

Optionally, if the embodiment shown in FIG. 7 further includes step 701b, step 701b specifically includes: The first terminal device sends the second request to the network device through the first resource.

Optionally, the embodiment shown in FIG. 7 further includes step 701e. Step 701e may be performed before step 701c.

701e: The network device separately sends information about an SL BWP to the first terminal device and a communication device.

The information about the SL BWP includes configuration information of the shared resource pool and configuration information of the dedicated resource pool. The configuration information of the shared resource pool includes a configuration of a positioning reference signal resource in the shared resource pool, for example, a time domain symbol occupied by the positioning reference signal resource in the shared resource pool in a slot, a number of time domain symbols occupied by the positioning reference signal resource, a comb size of the positioning reference signal resource, or a frequency domain offset of the positioning reference signal resource. The configuration information of the dedicated resource pool includes a configuration of a positioning reference signal resource in the dedicated resource pool. It should be noted that the configuration of the positioning reference signal resource in the shared resource pool and the configuration of the positioning reference signal resource in the dedicated resource pool may be independently configured. In other words, the network device configures a configuration of a positioning reference signal resource based on a type of a resource pool. Configurations of positioning reference signal resources in different resource pools may be the same or different. This is not specifically limited in this application.

Optionally, the embodiment shown in FIG. 7 further includes step 702. Step 702 may be performed after step 701.

702: The first terminal device sends a positioning reference signal to the communication device on the first positioning reference signal resource. Correspondingly, the communication device receives the positioning reference signal sent by the first terminal device on the first positioning reference signal resource.

Optionally, the communication device is an access network device, an RSU, or a second terminal device.

Optionally, if the embodiment shown in FIG. 7 further includes step 702a, there is no fixed execution sequence between step 702 and step 702a. Step 702 may be performed before step 702a, step 702a may be performed before step 702, or step 702 and step 702a may be simultaneously performed depending on a situation. This is not specifically limited in this application.

Optionally, the embodiment shown in FIG. 7 further includes step 702b.

702b: The first terminal device sends data to the communication device on the first data transmission resource.

In a possible implementation, the first DCI further indicates the first data transmission resource scheduled for the first terminal device. Step 702b may be performed after step 701.

In another possible implementation, the embodiment shown in FIG. 7 further includes step 702a. In this case, step 702b may be performed after step 702a.

It should be noted that in the foregoing two implementations, there is no fixed execution sequence between step 702 and step 702b. Step 702 may be performed before step 702b, step 702b may be performed before step 702, or step 702 and step 702b may be simultaneously performed depending on a situation. This is not specifically limited in this application. For example, if the first data transmission resource and the first positioning reference signal resource occupy a same time domain resource, step 702 and step 702b are simultaneously performed.

Optionally, the embodiment shown in FIG. 7 further includes step 703. Step 703 may be performed after step 702.

703: The communication device sends measurement information to the first terminal device. Correspondingly, the first terminal device receives the measurement information from the communication device.

The measurement information is obtained by the communication device by measuring the positioning reference signal from the first terminal device. Optionally, the measurement information includes a measurement quantity obtained by the communication device by measuring the positioning reference signal. For example, the measurement information includes a time of arrival (Time of arrival, TOA), an angle of arrival (Angle of arrival, AOA), a receive-transmit time difference (Rx-Tx time difference), a carrier phase (carrier phase), and/or a reference signal received power (Reference Signal Received Power, RSRP). This is not specifically limited in this application.

Specifically, after the first terminal device receives the measurement information, the first terminal device may position the first terminal device with reference to the measurement information.

It should be noted that step 703 is merely a possible implementation. During actual application, the communication device may not send the measurement information to the first terminal device. The communication device may send the measurement information to the network device or a positioning device. Alternatively, the communication device may position the first terminal device with reference to the measurement information.

Optionally, the embodiment shown in FIG. 7 further includes step 704. Step 704 may be performed after step 703.

704: The first terminal device sends feedback information to the network device. The feedback information is for feeding back that the positioning reference signal of the first terminal device is successfully sent or is successfully received. Correspondingly, the network device receives the feedback information from the first terminal device.

After the first terminal device receives the measurement information in step 703, the first terminal device may send the feedback information to the network device.

Step 704 is merely a possible implementation. Optionally, if the first terminal device does not receive the measurement information in step 704, the first terminal device sends a third feedback to the network device, where the third feedback indicates that the positioning reference signal resource of the first terminal device fails to be sent or fails to be received.

Step 704 is merely a possible implementation. During actual application, a measurement status may alternatively be fed back to the network device in another manner. For example, optionally, the measurement information includes measurement quality obtained by the communication device by measuring the positioning reference signal. When the measurement quality is greater than or equal to a first threshold, the first terminal device sends an ACK to the network device; or when the measurement quality is less than a first threshold, the first terminal device sends a NACK to the network device.

In this implementation, the first terminal device may feed back the ACK or the NACK to the network device based on the measurement quality. For example, the ACK may be for feeding back, to the network device, that the measurement quality is greater than or equal to the first threshold, may indicate that the measurement quality meets a requirement of the first terminal device, or may be for feeding back, to the network device, that the positioning reference signal is successfully measured. The NACK may be for feeding back, to the network device, that the measurement quality is less than the first threshold, may indicate that the measurement quality does not meet a requirement of the first terminal device, or may be for feeding back, to the network device, that the positioning reference signal fails to be measured.

Optionally, the measurement quality may be determined and obtained based on energy of the positioning reference signal received by the communication device, a feature of a channel between the communication device and the first terminal device, and a measurement algorithm.

In this embodiment of this application, the first terminal device sends the first request to the network device. The first request is for requesting the positioning reference signal resource. Then, the first terminal device receives the first DCI from the network device. The first DCI indicates the first positioning reference signal resource scheduled for the first terminal device. It can be learned from this that the first terminal device requests the positioning reference signal resource from the network device by using the first request. In this way, the network device schedules the first positioning reference signal resource for the first terminal device by using the first DCI.

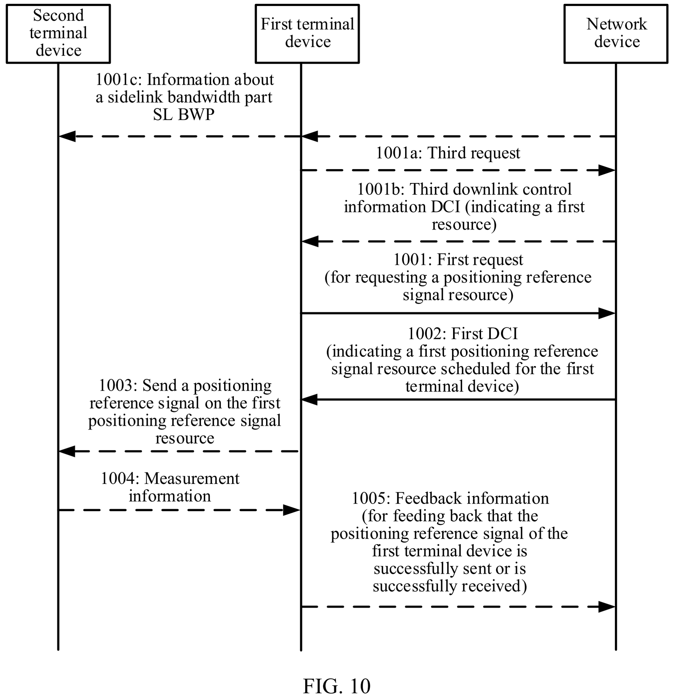

The following describes some possible procedure examples of the technical solutions of this application with reference to FIG. 10 to FIG. 12. It should be noted that an example in which the communication device is the second terminal device is used in the following examples for description.

FIG. 10 is a diagram of another embodiment of a communication method according to embodiments of this application. Refer to FIG. 10. The method includes the following steps.

1001: A first terminal device sends a first request to a network device. The first request is for requesting a positioning reference signal resource. Correspondingly, the network device receives the first request from the first terminal device.

In step 1001, the first terminal device only needs the positioning reference signal resource. Therefore, the first request is for requesting only the positioning reference signal resource. For some related descriptions of the first request, refer to descriptions in step 701a in the embodiment shown in FIG. 7. Details are not described herein again.

Optionally, the first request is carried in a MAC CE. For a possible format of the MAC CE, refer to related descriptions of the MAC CE shown in FIG. 9D.

1002: The network device sends first DCI to the first terminal device. The first DCI indicates a first positioning reference signal resource scheduled for the first terminal device. Correspondingly, the first terminal device receives the first DCI from the network device.

For the first DCI, refer to related descriptions of step 1001. Details are not described herein again. For example, the first DCI includes a first field; and when a value of the first field is 01, the first field indicates the first terminal device to send only a positioning reference signal in a slot scheduled by using the first DCI. The first terminal device only needs the positioning reference signal resource, and the first terminal device requests the positioning reference signal resource by using the first request. Therefore, the network device may schedule the first positioning reference signal resource for the first terminal device by using the first DCI. In this way, the first terminal device sends only a positioning reference signal in the slot scheduled by using the first DCI.

Optionally, the embodiment shown in FIG. 10 further includes step 1001a and step 1001b. Step 1001a and step 1001b may be performed before step 1001.

1001a: The first terminal device sends a third request to the network device. Correspondingly, the network device receives the third request from the first terminal device.

The third request is for notifying the network device that the first terminal device is to send a positioning reference signal. In this embodiment, the first terminal device only needs the positioning reference signal resource. Therefore, the third request may be for requesting only a resource for sending the first request.

1001b: The network device sends third DCI to the first terminal device. The third DCI indicates a first resource. Correspondingly, the first terminal device receives the third DCI from the network device.

The first resource is for sending the first request.

Based on step 1001b, step 1001 specifically includes: The first terminal device sends the first request to the network device through the first resource. Correspondingly, the network device receives the first request from the first terminal device through the first resource.

Optionally, the embodiment shown in FIG. 10 further includes step 1001c. Step 1001c may be performed before step 1001a and step 1001b.

1001c: The network device separately sends information about an SL BWP to the first terminal device and a second terminal device.

Step 1001c is similar to step 701e in the embodiment shown in FIG. 7. For details, refer to related descriptions of step 701e in the embodiment shown in FIG. 7, and the details are not described herein again.

Optionally, the embodiment shown in FIG. 10 further includes step 1003. Step 1003 may be performed after step 1002.

1003: The first terminal device sends a positioning reference signal to the second terminal device on the first positioning reference signal resource. Correspondingly, the second terminal device receives the positioning reference signal from the first terminal device on the first positioning reference signal resource.

Optionally, the embodiment shown in FIG. 10 further includes step 1004. Step 1004 may be performed after step 1003.

1004: The second terminal device sends measurement information to the first terminal device. Correspondingly, the first terminal device receives the measurement information from the second terminal device.

Step 1004 is similar to step 703 in the embodiment shown in FIG. 7. For details, refer to related descriptions of step 703 in the embodiment shown in FIG. 7, and the details are not described herein again.

Optionally, the embodiment shown in FIG. 10 further includes step 1005. Step 1005 may be performed after step 1004.

1005: The first terminal device sends feedback information to the network device. The feedback information is for feeding back that the positioning reference signal of the first terminal device is successfully sent or is successfully received. Correspondingly, the network device receives the feedback information from the first terminal device.

Step 1005 is similar to step 704 in the embodiment shown in FIG. 7. For details, refer to related descriptions of step 704 in the embodiment shown in FIG. 7, and the details are not described herein again.

It can be learned from the embodiment shown in FIG. 10 that the first terminal device may request the positioning reference signal resource from the network device by using the first request. Then, the network device schedules the first positioning reference signal resource for the first terminal device by using the first DCI. In this way, transmission of the positioning reference signal is performed between the first terminal device and the second terminal device, to implement sidelink positioning.

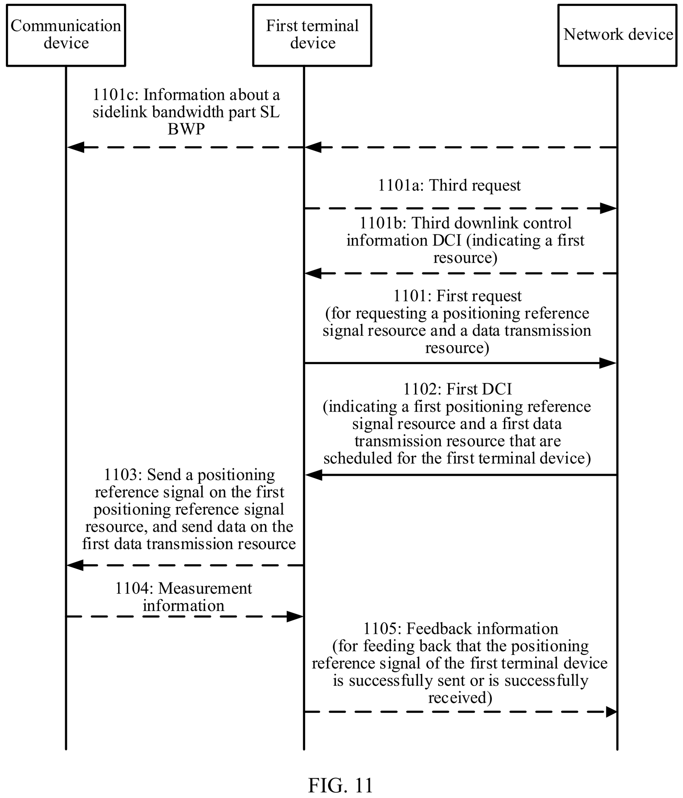

FIG. 11 is a diagram of still another embodiment of a communication method according to embodiments of this application. Refer to FIG. 11. The method includes the following steps.

1101: A first terminal device sends a first request to a network device. The first request is for requesting a positioning reference signal resource and a data transmission resource. Correspondingly, the network device receives the first request from the first terminal device.

In step 1101, the first terminal device needs both the data transmission resource and the positioning reference signal resource. Therefore, the first request may be for requesting the positioning reference signal resource and/or the data transmission resource. For some related descriptions of the first request, refer to descriptions in step 701a in the embodiment shown in FIG. 7. Details are not described herein again.

Optionally, the first request is carried in a MAC CE. For some possible formats of the MAC CE, refer to related descriptions of the MAC CEs shown in FIG. 9A to FIG. 9C.

1102: The network device sends first DCI to the first terminal device. The first DCI indicates a first positioning reference signal resource and a first data transmission resource that are scheduled for the first terminal device. Correspondingly, the first terminal device receives the first DCI from the network device.

For the first DCI, refer to related descriptions of step 1001. Details are not described herein again. In this implementation, the network device schedules both the first positioning reference signal resource and the first data transmission resource for the first terminal device by using the first DCI. For example, the first DCI includes a first field; and when a value of the first field is 10, the first field indicates the first terminal device to send data and a positioning reference signal resource in a slot scheduled by using the first DCI. The first terminal device needs both the data transmission resource and the positioning reference signal resource. The first terminal device requests the data transmission resource and/or the positioning reference signal resource from the network device by using the first request. Therefore, the network device may schedule the first positioning reference signal resource and the first data transmission resource for the first terminal device by using the first DCI. In this way, the first terminal device sends data and a positioning reference signal in the slot scheduled by using the first DCI.

Optionally, the embodiment shown in FIG. 11 further includes step 1101a and step 1101b. Step 1101a and step 1101b may be performed before step 1101.

1101a: The first terminal device sends a third request to the network device. Correspondingly, the network device receives the third request from the first terminal device.

In step 1101a, the third request is for notifying the network device that the first terminal device is to send a positioning reference signal and data. For more detailed descriptions of step 1101a, refer to related descriptions of step 701c in the embodiment shown in FIG. 7.

1101b: The first terminal device receives third DCI from the network device. The third DCI indicates a first resource. Correspondingly, the network device receives the third DCI from the first terminal device.

The first resource is for sending the first request.

Based on step 1101 b, optionally, step 1101 specifically includes: The first terminal device sends the first request to the network device through the first resource. Correspondingly, the network device receives the first request from the first terminal device through the first resource.

Optionally, the embodiment shown in FIG. 11 further includes step 1101c. Step 1101c may be performed before step 1101a.

1101c: The network device sends information about an SL BWP to the first terminal device and a second terminal device.

Step 1101c is similar to step 701e in the embodiment shown in FIG. 7. For details, refer to related descriptions of step 701e in the embodiment shown in FIG. 7, and the details are not described herein again.

Optionally, the embodiment shown in FIG. 11 further includes step 1103. Step 1103 may be performed after step 1102.

1103: The first terminal device sends a positioning reference signal to the second terminal device on the first positioning reference signal resource, and sends data to the second terminal device on the first data transmission resource. Correspondingly, the second terminal device receives the positioning reference signal from the first terminal device on the first positioning reference signal resource, and receives the data from the first terminal device on the first data transmission resource.

In this implementation, the first positioning reference signal resource and the first data transmission resource may occupy a same time domain resource. The first terminal device sends the positioning reference signal and the data to the second terminal device on different frequency domain resources of the same time domain resource.

Optionally, the embodiment shown in FIG. 11 further includes step 1104. Step 1104 may be performed after step 1103.

1104: The second terminal device sends measurement information to the first terminal device. Correspondingly, the first terminal device receives the measurement information from the second terminal device.

Step 1104 is similar to step 703 in the embodiment shown in FIG. 7. For details, refer to related descriptions of step 703 in the embodiment shown in FIG. 7, and the details are not described herein again.

Optionally, the embodiment shown in FIG. 11 further includes step 1105. Step 1105 may be performed after step 1104.

1105: The first terminal device sends feedback information to the network device. The feedback information is for feeding back that the positioning reference signal of the first terminal device is successfully sent or is successfully received. Correspondingly, the network device receives the feedback information from the first terminal device.

Step 1105 is similar to step 704 in the embodiment shown in FIG. 7. For details, refer to related descriptions of step 704 in the embodiment shown in FIG. 7, and the details are not described herein again.

It can be learned from the embodiment shown in FIG. 11 that the first terminal device may request the positioning reference signal resource and/or the data transmission resource from the network device by using the first request. Then, the network device schedules the first positioning reference signal resource and the first data transmission resource for the first terminal device by using the first DCI. In this way, transmission of the positioning reference signal and the data is performed between the first terminal device and the second terminal device, to implement sidelink positioning and data transmission.

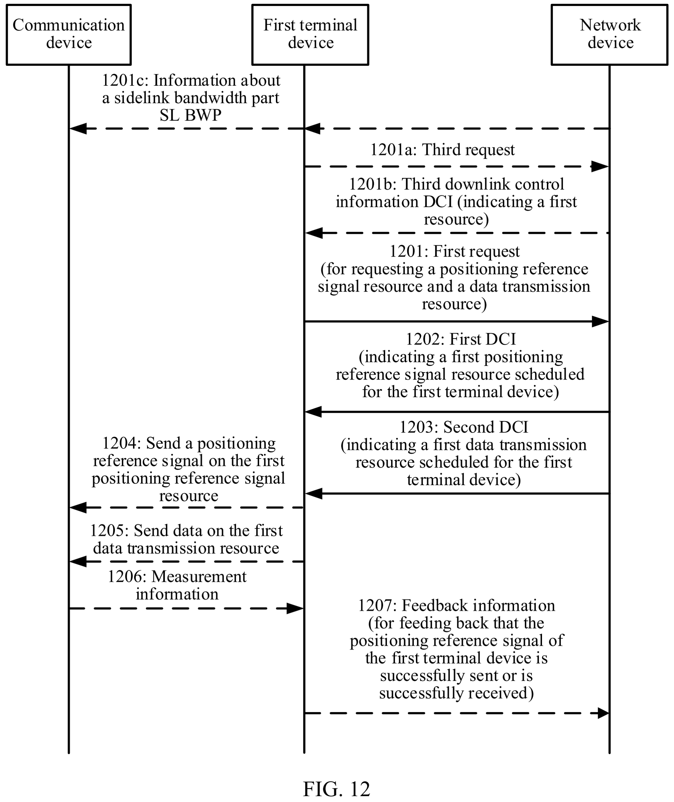

FIG. 12 is a diagram of yet another embodiment of a communication method according to embodiments of this application. Refer to FIG. 12. The method includes the following steps.

1201: A first terminal device sends a first request to a network device. The first request is for requesting a positioning reference signal resource and/or a data transmission resource. Correspondingly, the network device receives the first request from the first terminal device.

Step 1201 is similar to step 1101 in the embodiment shown in FIG. 11. For details, refer to related descriptions of step 1101 in the embodiment shown in FIG. 11, and the details are not described herein again.

1202: The network device sends first DCI to the first terminal device. The first DCI indicates a first positioning reference signal resource scheduled for the first terminal device. Correspondingly, the first terminal device receives the first DCI from the network device.

For the first DCI, refer to related descriptions of step 1001. Details are not described herein again. For example, the first DCI includes a first field; and when a value of the first field is 01, the first field indicates the first terminal device to send only a positioning reference signal in a slot scheduled by using the first DCI. The first terminal device requests the positioning reference signal resource by using the first request. Therefore, the network device may schedule the first positioning reference signal resource for the first terminal device by using the first DCI. In this way, the first terminal device sends only a positioning reference signal in the slot scheduled by using the first DCI.

1203: The network device sends second DCI to the first terminal device. The second DCI indicates a first data transmission resource scheduled for the first terminal device. Correspondingly, the first terminal device receives the second DCI from the network device.

Step 1203 is similar to step 702a in the embodiment shown in FIG. 7. For details, refer to related descriptions in the embodiment shown in FIG. 7.

In step 1202 and step 1203, the network device schedules the first positioning reference signal resource for the first terminal device by using the first DCI, and schedules the first data transmission resource for the first terminal device by using the second DCI. To be specific, in step 1201, the first terminal device requests the data transmission resource and/or the positioning reference signal resource by using the first request, and the network device separately schedules the first positioning reference signal resource and the first data transmission resource through step 1202 and step 1203.

Optionally, the embodiment shown in FIG. 12 further includes step 1201a and step 1201b. Step 1201a and step 1201b may be performed before step 1201.

1201a: The first terminal device sends a third request to the network device. Correspondingly, the network device receives the third request from the first terminal device.

In step 1201a, the third request is for notifying the network device that the first terminal device is to send a positioning reference signal and data. For more detailed descriptions of step 1201a, refer to related descriptions of step 701c in the embodiment shown in FIG. 7.

1201b: The first terminal device receives third DCI from the network device. The third DCI indicates a first resource. Correspondingly, the network device receives the third DCI from the first terminal device.

The first resource is for sending the first request.

Based on step 1201b, optionally, step 1201 specifically includes: The first terminal device sends the first request to the network device through the first resource. Correspondingly, the network device receives the first request from the first terminal device through the first resource.

Optionally, the embodiment shown in FIG. 12 further includes step 1201c. Step 1201c may be performed before step 1201a.

1201c: The network device sends information about an SL BWP to the first terminal device and a second terminal device.

Step 1201c is similar to step 701e in the embodiment shown in FIG. 7. For details, refer to related descriptions of step 701e in the embodiment shown in FIG. 7, and the details are not described herein again.

Optionally, the embodiment shown in FIG. 12 further includes step 1204. Step 1204 may be performed after step 1202.

1204: The first terminal device sends a positioning reference signal to the second terminal device on the first positioning reference signal resource. Correspondingly, the second terminal device receives the positioning reference signal from the first terminal device on the first positioning reference signal resource.

Optionally, the embodiment shown in FIG. 12 further includes step 1205. Step 1205 may be performed after step 1203.

1205: The first terminal device sends data to the second terminal device on the first data transmission resource. Correspondingly, the second terminal device receives the data from the first terminal device on the first data transmission resource.

There is no fixed execution sequence between step 1204 and step 1205. Step 1204 may be performed before step 1205, step 1204 may be performed before step 1205, or step 1204 and step 1205 may be simultaneously performed depending on a situation. This is not specifically limited in this application.

Optionally, the embodiment shown in FIG. 12 further includes step 1206. Step 1206 may be performed after step 1204.

1206: The second terminal device sends measurement information to the first terminal device. Correspondingly, the first terminal device receives the measurement information from the second terminal device.

Step 1206 is similar to step 703 in the embodiment shown in FIG. 7. For details, refer to related descriptions of step 703 in the embodiment shown in FIG. 7, and the details are not described herein again.

Optionally, the embodiment shown in FIG. 12 further includes step 1207. Step 1207 may be performed after step 1206.

1207: The first terminal device sends feedback information to the network device. The feedback information is for feeding back that the positioning reference signal of the first terminal device is successfully sent or is successfully received. Correspondingly, the network device receives the feedback information from the first terminal device.

Step 1207 is similar to step 704 in the embodiment shown in FIG. 7. For details, refer to related descriptions of step 704 in the embodiment shown in FIG. 7, and the details are not described herein again.

It can be learned from the embodiment shown in FIG. 12 that the first terminal device may request the positioning reference signal resource and/or the data transmission resource from the network device by using the first request. Then, the network device schedules the first positioning reference signal resource for the first terminal device by using the first DCI, and schedules the first data transmission resource for the first terminal device by using the second DCI. In this way, transmission of the positioning reference signal and the data is performed between the first terminal device and the second terminal device, to implement sidelink positioning and data transmission.

The following describes communication apparatuses provided in embodiments of this application.

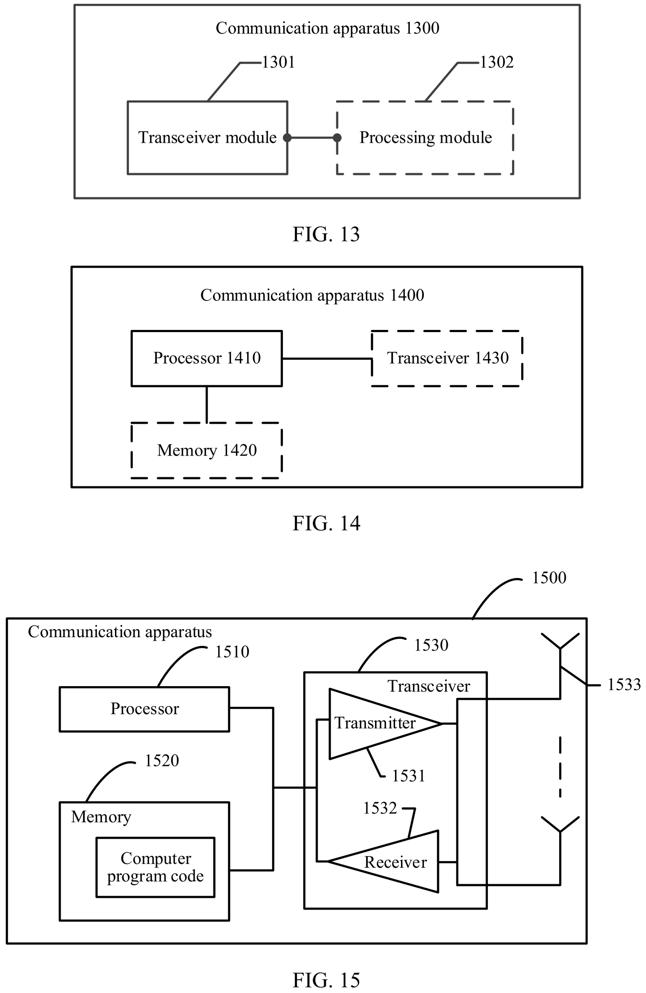

FIG. 13 is a diagram of a structure of a communication apparatus according to an embodiment of this application. Refer to FIG. 13. The communication apparatus may be configured to perform a process performed by the first terminal device in any one of the embodiments shown in FIG. 7 and FIG. 10 to FIG. 12. For details, refer to related descriptions in the foregoing method embodiments.

The communication apparatus 1300 includes a transceiver module 1301. Optionally, the communication apparatus 1300 further includes a processing module 1302.

The processing module 1302 is configured to process data. The transceiver module 1301 may implement a corresponding communication function. The transceiver module 1301 may also be referred to as a communication interface or a communication module.

Optionally, the communication apparatus 1300 may further include a storage module. The storage module may be configured to store instructions and/or data. The processing module 1302 may read the instructions and/or the data in the storage module, so that the communication apparatus implements the foregoing method embodiments.

The communication apparatus 1300 may be configured to perform actions performed by the first terminal device in the foregoing method embodiments. The communication apparatus 1300 may be a terminal device or a component that may be configured in the first terminal device. The processing module 1302 is configured to perform a processing-related operation on a first terminal device side in the foregoing method embodiments. The transceiver module 1301 is configured to perform a receiving-related operation on the first terminal device side in the foregoing method embodiments.

Optionally, the transceiver module 1301 may include a sending module and a receiving module. The sending module is configured to perform a sending operation in the foregoing method embodiments. The receiving module is configured to perform a receiving operation in the foregoing method embodiments.

It should be noted that the communication apparatus 1300 may include a sending module, but does not include a receiving module. Alternatively, the communication apparatus 1300 may include a receiving module, but does not include a sending module. This may specifically depend on whether the foregoing solution performed by the communication apparatus 1300 includes a sending action and a receiving action.

Optionally, the communication apparatus 1300 is configured to perform actions performed by the terminal device in any one of the embodiments shown in FIG. 7 and FIG. 10 to FIG. 12. For details, refer to related descriptions in any one of the embodiments shown in FIG. 7 and FIG. 10 to FIG. 12, and the details are not described herein again.

It should be understood that specific processes in which the modules perform the foregoing corresponding processes have been described in detail in the foregoing method embodiments. For brevity, details are not described herein again.

The processing module 1302 in the foregoing embodiment may be implemented by at least one processor or a processor-related circuit. The transceiver module 1301 may be implemented by a transceiver or a transceiver-related circuit. The transceiver module 1301 may also be referred to as a communication module or a communication interface. The storage module may be implemented by at least one memory.

An embodiment of this application further provides a communication apparatus 1400. Refer to FIG. 14. The communication apparatus 1400 includes a processor 1410. The processor 1410 is coupled to a memory 1420. The memory 1420 is configured to store a computer program or instructions and/or data. The processor 1410 is configured to execute the computer program or the instructions and/or the data stored in the memory 1420, so that the methods in the foregoing method embodiments are performed. The communication apparatus 1400 is configured to implement operations performed by the first terminal device in the foregoing method embodiments.

Optionally, the communication apparatus 1400 includes one or more processors 1410.

Optionally, as shown in FIG. 14, the communication apparatus 1400 may further include the memory 1420.

Optionally, the communication apparatus 1400 may include one or more memories 1420.

Optionally, the memory 1420 and the processor 1410 may be integrated together or separately configured.

Optionally, as shown in FIG. 14, the communication apparatus 1400 may further include a transceiver 1430. The transceiver 1430 is configured to receive and/or send a signal. For example, the processor 1410 is configured to control the transceiver 1430 to receive and/or send a signal.

This application further provides a communication apparatus 1500. The communication apparatus 1500 may be a terminal device, a processor of the terminal device, or a chip. The communication apparatus 1500 may be configured to perform operations performed by the first terminal device in the foregoing method embodiments.

When the communication apparatus 1500 is the terminal device, FIG. 15 is a simplified diagram of a structure of the terminal device. As shown in FIG. 15, the terminal device includes a processor, a memory, and a transceiver. The memory may store computer program code. The transceiver includes a transmitter 1531, a receiver 1532, a radio frequency circuit (not shown in the figure), an antenna 1533, and an input/output apparatus (not shown in the figure).

The processor is mainly configured to: process a communication protocol and communication data, control the terminal device, execute a software program, process data of the software program, and so on. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus may include a touchscreen, a display screen, a keyboard, or the like. The input/output apparatus is mainly configured to receive data input by a user and output data to the user. It should be noted that some types of terminal devices may have no input/output apparatus.

When data needs to be sent, the processor performs baseband processing on the to-be-sent data, and outputs a baseband signal to the radio frequency circuit. Then, the radio frequency circuit performs radio frequency processing on the baseband signal, and then sends a radio frequency signal to the outside in a form of an electromagnetic wave through the antenna. When data is sent to the terminal device, the radio frequency circuit receives a radio frequency signal through the antenna. The radio frequency circuit converts the radio frequency signal into a baseband signal, and outputs the baseband signal to the processor. The processor converts the baseband signal into data and processes the data. For ease of description, FIG. 15 shows only one memory, one processor, and one transceiver. In an actual terminal device product, there may be one or more processors and one or more memories. The memory may also be referred to as a storage medium, a storage device, or the like. The memory may be configured independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 15, the terminal device includes a processor 1510, a memory 1520, and a transceiver 1530. The processor 1510 may also be referred to as a processing unit, a processing board, a processing module, a processing apparatus, or the like. The transceiver 1530 may also be referred to as a transceiver unit, a transceiver machine, a transceiver apparatus, or the like.

Optionally, a component configured to implement a receiving function in the transceiver 1530 is considered as a receiving module, and a component configured to implement a sending function in the transceiver 1530 is considered as a sending module. In other words, the transceiver 1530 includes a receiver and a transmitter. The transceiver sometimes may also be referred to as a transceiver machine, a transceiver module, a transceiver circuit, or the like. The receiver sometimes may also be referred to as a receiver machine, a receiving module, a receiver circuit, or the like. The transmitter sometimes may also be referred to as a transmitter machine, a transmitting module, a transmitter circuit, or the like.

The processor 1501 is configured to perform a processing action on a first terminal device side in any one of the embodiments shown in FIG. 7 and FIG. 10 to FIG. 12. The transceiver 1530 is configured to perform sending and receiving actions on the first terminal device side in any one of the embodiments shown in FIG. 7 and FIG. 10 to FIG. 12.

It should be understood that FIG. 15 is merely an example rather than a limitation. The terminal device including the transceiver module and the processing module may not depend on the structure shown in FIG. 13 or FIG. 15.

When the communication apparatus 1500 is the chip, the chip includes a processor, a memory, and a transceiver. The transceiver may be an input/output circuit or a communication interface. The processor may be a processing module, a microprocessor, or an integrated circuit integrated on the chip. A sending operation of the terminal device in the foregoing method embodiments may be understood as an output of the chip, and a receiving operation of the terminal device in the foregoing method embodiments may be understood as an input of the chip.

An embodiment of this application further provides a computer-readable storage medium. The computer-readable storage medium stores computer instructions for implementing the method performed by the first terminal device or the network device in the foregoing method embodiments.

For example, when the computer program is executed by a computer, the computer is enabled to implement the method performed by the first terminal device or the network device in the foregoing method embodiments.

An embodiment of this application further provides a computer program product including instructions. When the instructions are executed by a computer, the computer is enabled to implement the method performed by the first terminal device or the network device in the foregoing method embodiments.

An embodiment of this application further provides a communication system. The communication system includes the first terminal device in the foregoing embodiments and the network device in the foregoing embodiments. Optionally, the communication system further includes the communication device in the foregoing embodiments.

An embodiment of this application further provides a chip apparatus, including a processor, configured to invoke a computer program or computer instructions stored in a memory, so that the processor performs the method in any one of the embodiments shown in FIG. 7 and FIG. 10 to FIG. 12.

In a possible implementation, an input of the chip apparatus corresponds to a receiving operation in any one of the embodiments shown in FIG. 7 and FIG. 10 to FIG. 12, and an output of the chip apparatus corresponds to a sending operation in any one of the embodiments shown in FIG. 7 and FIG. 10 to FIG. 12.

Optionally, the processor is coupled to the memory through an interface.

Optionally, the chip apparatus further includes the memory, and the memory stores the computer program or the computer instructions.

The processor mentioned anywhere above may be a general-purpose central processing unit, a microprocessor, an application-specific integrated circuit (application-specific integrated circuit, ASIC), or one or more integrated circuits configured to control program execution for the method provided in any one of the embodiments shown in FIG. 7 and FIG. 10 to FIG. 12. The memory mentioned anywhere above may be a read-only memory (read-only memory, ROM), another type of static storage device that can store static information and instructions, a random access memory (random access memory, RAM), or the like.

It can be clearly understood by persons skilled in the art that, for convenient and brief description, for explanations and beneficial effects of related content in any one of the communication apparatuses provided above, refer to the corresponding method embodiment provided above. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, a part that essentially contributes to the technical solutions of this application or all or a part of the technical solutions may be implemented in a form of a software product. The computer software product is stored in a storage medium, and includes several instructions for enabling a computer device (which may be a personal computer, a server, a network device, or the like) to perform all or a part of steps of the methods in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions set forth in the foregoing embodiments or make equivalent replacements to some technical features thereof, without departing from the scope of the technical solutions of embodiments of this application.

**Claims**

1. A communication method, wherein the method comprises:

   sending, by a first terminal device, a first request to a network device, wherein the first request is for requesting a positioning reference signal resource; and
   receiving, by the first terminal device, first downlink control information, DCI, from the network device, wherein the first DCI indicates a first positioning reference signal resource scheduled for the first terminal device.,,

2. The method according to claim 1, wherein the first request comprises at least one of the following:

   a bandwidth of the positioning reference signal resource requested by the first terminal device;
   a number of time domain symbols occupied by the positioning reference signal resource requested by the first terminal device;
   a comb size of the positioning reference signal resource requested by the first terminal device;
   a frequency domain offset of the positioning reference signal resource requested by the first terminal device;
   a start time domain symbol occupied by the positioning reference signal resource requested by the first terminal device;
   a number of positioning reference signal resources requested by the first terminal device;
   a time interval between time domain positions occupied by a plurality of positioning reference signal resources requested by the first terminal device;
   first indication information, wherein the first indication information indicates a resource pool to which the positioning reference signal resource requested by the first terminal device belongs;
   second indication information, wherein the second indication information indicates the positioning reference signal resource requested by the first terminal device; or
   third indication information, wherein the third indication information indicates that the first terminal device requests the positioning reference signal resource.

3. The method according to claim 1 or 2, wherein the first request is carried in a medium access control control element, MAC CE.

4. The method according to any one of claims 1 to 3, wherein the first request is further for requesting a data transmission resource; or
   the method further comprises: sending, by the first terminal device, a second request to the network device, wherein the second request is for requesting a data transmission resource.

5. The method according to any one of claims 1 to 4, wherein that the first DCI indicates the first positioning reference signal resource scheduled for the first terminal device comprises:

   the first DCI comprises a first field; and
   when a value of the first field is a first value, the first field indicates to send only a positioning reference signal in a slot scheduled by using the first DCI; or
   when a value of the first field is a second value, the first field indicates to send data and a positioning reference signal in a slot scheduled by using the first DCI.

6. The method according to any one of claims 1 to 4, wherein that the first DCI indicates the first positioning reference signal resource scheduled for the first terminal device comprises:
   the first DCI is for scheduling n slots, the first DCI comprises a second field, and the second field indicates to send only a positioning reference signal, only data, or data and a positioning reference signal in a $1^{st}$ slot in the n slots, ..., send only a positioning reference signal, only data, or data and a positioning reference signal in an $i^{th}$ slot, ..., and send only a positioning reference signal, only data, or data and a positioning reference signal in an $n^{th}$ slot, wherein n is an integer greater than or equal to 1, and i is an integer greater than or equal to 2 and less than n.

7. The method according to any one of claims 1 to 4, wherein that the first DCI indicates the first positioning reference signal resource scheduled for the first terminal device comprises:

the first DCI comprises a plurality of third fields, and the plurality of third fields correspond to a plurality of slots scheduled by using the first DCI; and

when a value of a third field in the plurality of third fields is a third value, the third field indicates the first terminal device to send only a positioning reference signal in a slot corresponding to the third field;

when a value of a third field in the plurality of third fields is a fourth value, the third field indicates the first terminal device to send only data in a slot corresponding to the third field; or

when a value of a third field in the plurality of third fields is a fifth value, the third field indicates the first terminal device to send data and a positioning reference signal in a slot corresponding to the third field.

8. The method according to any one of claims 1 to 4, wherein the first DCI comprises a fourth field, the fourth field is for an index of a dedicated resource pool, and the first positioning reference signal resource belongs to the dedicated resource pool.

9. The method according to any one of claims 1 to 8, wherein the first DCI further comprises a fifth field, and the fifth field indicates the positioning reference signal resource scheduled by using the first DCI.

10. The method according to claim 9, wherein a length of the fifth field is related to a number of preconfigured positioning reference signal resources in each slot scheduled by using the first DCI, or a length of the fifth field is related to a number of preconfigured positioning reference signal resources in the resource pool to which the positioning reference signal resource scheduled by using the first DCI belongs.

11. The method according to claim 9 or 10, wherein the length of the fifth field meets the following condition:

$$\left\lceil \log_2 N^k \right\rceil$$ , wherein $\left\lceil \log_2 N^k \right\rceil$ indicates rounding of $\log_2 N^k$, and k is a number of positioning reference signal resources scheduled by using the first DCI; and N is the number of preconfigured positioning reference signal resources in each slot scheduled by using the first DCI, N is a ranking number of a positioning reference signal resource with a maximum ranking number in each slot scheduled by using the first DCI, or N is the number of preconfigured positioning reference signal resources in the resource pool to which the positioning reference signal resource scheduled by using the first DCI belongs.

12. The method according to any one of claims 1 to 11, wherein before the sending, by the first terminal device, the first request to the network device, the method further comprises:

sending, by the first terminal device, a third request to the network device; and

receiving, by the first terminal device, second DCI from the network device, wherein the second DCI indicates a first resource; and

the sending, by the first terminal device, the first request to the network device comprises:

sending, by the first terminal device, the first request on the first resource.

13. The method according to any one of claims 1 to 12, wherein the method further comprises:

sending, by the first terminal device, a positioning reference signal on the first positioning reference signal resource.

14. The method according to claim 13, wherein after the sending, by the first terminal device, the positioning reference signal on the first positioning reference signal resource, the method further comprises:

receiving, by the first terminal device, measurement information from a second terminal device, wherein the measurement information is obtained by the second terminal device by measuring the positioning reference signal.

15. The method according to claim 14, wherein after the receiving, by the first terminal device, the measurement information from the second terminal device, the method further comprises:

sending, by the first terminal device, feedback information to the network device, wherein the feedback information is for feeding back that the positioning reference signal is successfully sent or is successfully received.

16. The method according to claim 14, wherein the measurement information comprises measurement quality obtained by the second terminal device by measuring the positioning reference signal; and after the receiving, by the first terminal device, the measurement information from the second terminal device, the method further comprises:

when the measurement quality is greater than or equal to a first threshold, sending, by the first terminal device, acknowledgment ACK information to the network device; or

when the measurement quality is less than the first threshold, sending, by the first terminal device, a negative acknowledgment NACK to the network device.

17. A communication apparatus, wherein the communication apparatus comprises a transceiver module, and the transceiver module is configured to perform receiving and sending operations in the method according to any one of claims 1 to 16.

18. A communication apparatus, wherein the communication apparatus comprises:

a memory, configured to store computer instructions; and
a processor, configured to execute a computer program or the computer instructions stored in the memory, to enable the communication apparatus to perform the method according to any one of claims 1 to 16.

19. A communication apparatus, wherein the communication apparatus comprises a processor, and the processor is configured to execute a computer program or computer instructions in a memory, to perform the method according to any one of claims 1 to 16.

20. A computer-readable storage medium, wherein the computer-readable storage medium stores a computer program; and when the computer program is executed by a communication apparatus, the communication apparatus is enabled to perform the method according to any one of claims 1 to 16.

FIG. 1

FIG. 2

FIG. 3

FIG. 4

FIG. 5A

| 2nd-stage SCI | Data |
|---|---|
| 1st-stage SCI | |

| 2nd-stage SCI | Sidelink-positioning reference signal SL-PRS |
|---|---|
| 1st-stage SCI | |

| 2nd-stage SCI | SL-PRS and data |
|---|---|
| 1st-stage SCI | |

Shared resource pool

| 1st-stage SCI | SL-PRS |
|---|---|

Dedicated resource pool

Network device — Different selection

**FIG. 5B**

| UE-A | UE-B | Base station |
|---|---|---|

601c: Configuration information of a resource pool

601d: Configuration information of the resource pool

601a: Resource scheduling request

601b: Downlink control information DCI 2

601: Medium access control sidelink-buffer status report MAC SL-BSR

602: Downlink control information DCI 1

603: Data

604: First feedback

605: Second feedback

**FIG. 6**

| Communication device | First terminal device | Network device |
|---|---|---|

701e: Information about a sidelink bandwidth part SL BWP

701c: Third request

701d: Third downlink control information DCI (indicating a first resource)

701a: First request (for requesting a positioning reference signal resource)

701b: Second request (for requesting a data transmission resource)

701: First DCI (indicating a first positioning reference signal resource scheduled for the first terminal device)

702a: Second DCI (indicating a first data transmission resource scheduled for the first terminal device)

702: Send a positioning reference signal on the first positioning reference signal resource

702b: Send data on the first data transmission resource

703: Measurement information

704: Feedback information (for feeding back that the positioning reference signal of the first terminal device is successfully sent or is successfully received)

FIG. 7

First DC1

| 2nd-stage SCI / 1st-stage SCI | Data |

A resource pool index field indicates an index of a shared resource pool

When a value of a first field is 00, the first field indicates a first terminal device to send only data in a slot scheduled by using first DCI

| 2nd-stage SCI / 1st-stage SCI | Sidelink-positioning reference signal SL-PRS |

A resource pool index field indicates an index of a shared resource pool

When a value of a first field is 01, the first field indicates a first terminal device to send only a positioning reference signal in a slot scheduled by using first DCI

| 2nd-stage SCI / 1st-stage SCI | Data and SL-PRS |

A resource pool index field indicates an index of a shared resource pool

When a value of a first field is 10, the first field indicates a first terminal device to send data and a positioning reference signal in a slot scheduled by using first DCI

| 1st-stage SCI | SL-PRS |

A resource pool index field indicates an index of a dedicated resource pool

A first field is ignored

FIG. 8

| Bit | 1 | 2 | 3 | 4 | 5 | 6 | 7 | 8 | |
|---|---|---|---|---|---|---|---|---|---|
| | | | | | | | | | |
| | Destination Index$_1$ | | | | | LCG ID$_1$ | | | Oct1 |
| | Buffer Size$_1$ | | | | | | | | Oct2 |
| | Destination Index$_2$ | | | | | LCG ID$_2$ | | | Oct3 |
| | Buffer Size$_2$ | | | | | | | | Oct4 |

...

| | Destination Index$_N$ | | | | | LCG ID$_N$ | | | Oct2N−1 |
|---|---|---|---|---|---|---|---|---|---|
| | Buffer Size$_N$ | | | | | | | | Oct2N |

## FIG. 9A

| Bit | 1 | 2 | 3 | 4 | 5 | 6 | 7 | 8 | |
|---|---|---|---|---|---|---|---|---|---|
| | | | | | | | | | |
| | Destination Index$_1$ | | | | | LCG ID$_1$ | | | Oct1 |
| | Buffer Size$_1$ | | | | | | | | Oct2 |
| | Field 1 | | | | | | | | Oct3 |
| | Destination Index$_2$ | | | | | LCG ID$_2$ | | | Oct4 |
| | Buffer Size$_2$ | | | | | | | | |
| | Field 2 | | | | | | | | |

...

| | Destination Index$_N$ | | | | | LCG ID$_N$ | | | Oct3N−2 |
|---|---|---|---|---|---|---|---|---|---|
| | Buffer Size$_N$ | | | | | | | | Oct3N−1 |
| | Field N | | | | | | | | Oct3N |

## FIG. 9B

43

| Bit | 1 | 2 | 3 | 4 | 5 | 6 | 7 | 8 | |
|---|---|---|---|---|---|---|---|---|---|
| | | | | | | | | | |
| | Destination Index$_1$ | | | | | LCG ID$_1$ | | | Oct1 |
| | Buffer Size$_1$ | | | | | | | | Oct2 |
| | Destination Index$_2$ | | | | | LCG ID$_2$ | | | Oct3 |
| | Buffer Size$_2$ | | | | | | | | Oct4 |

...

| | Destination Index$_N$ | | | | | LCG ID$_N$ | | | Oct2N−1 |
|---|---|---|---|---|---|---|---|---|---|
| | Buffer Size$_N$ | | | | | | | | Oct2N |
| | Field 1 | | | | | | | | |
| | Field 2 | | | | | | | | |

...

| | Field N | | | | | | | | Oct3N |
|---|---|---|---|---|---|---|---|---|---|

FIG. 9C

| Bit | 1 | 2 | 3 | 4 | 5 | 6 | 7 | 8 | |
|-----|---|---|---|---|---|---|---|---|---|
| | | | | | | | | | |
| | Destination Index$_1$ | | | | | LCG ID$_1$ | | | Oct1 |
| | Buffer Size$_1$ | | | | | | | | Oct2 |
| | Destination Index$_2$ | | | | | LCG ID$_2$ | | | Oct3 |
| | Buffer Size$_2$ | | | | | | | | Oct4 |

...

| | Destination Index$_6$ | | | | | LCG ID$_6$ | | | Oct11 |
|--|--|--|--|--|--|--|--|--|--|
| | Buffer Size$_6$ | | | | | | | | Oct12 |
| | 1 | 2 | 3 | 4 | 5 | 6 | 7 | 8 | Oct13 |

Field 1

FIG. 9D

45

| Bit | 1 | 2 | 3 | 4 | 5 | 6 | 7 | 8 | |
|---|---|---|---|---|---|---|---|---|---|
| | | | | | | | | | |
| | Destination Index$_1$ | | | | | Number of SL PRS request1 | | | Oct1 |
| | SL PRS Bandwith1 | | | | | | | | Oct2 |
| | Destination Index$_2$ | | | | | Number of SL PRS request2 | | | Oct3 |
| | SL PRS Bandwith2 | | | | | | | | Oct4 |

...

| | Destination Index$_N$ | Number of SL PRS request N | Oct2N−1 |
|---|---|---|---|
| | SL PRS Bandwith N | | Oct2N |

FIG. 9E

| Bit | 1 | 2 | 3 | 4 | 5 | 6 | 7 | 8 | |
|---|---|---|---|---|---|---|---|---|---|
| | | | | | | | | | |
| | Destination Index$_1$ | | | | | LCG ID$_1$ | | | Oct1 |
| | Buffer Size$_1$ | | | | | | | | Oct2 |
| | SL-PRS Bandwidth1 | | | | | SL-PRS Number1 | | | Oct3 |
| | Destination Index$_2$ | | | | | LCG ID$_2$ | | | Oct4 |
| | Buffer Size$_2$ | | | | | | | | |
| | SL-PRS Bandwidth2 | | | | | SL-PRS Number2 | | | |

...

| | | | | | | | | | |
|---|---|---|---|---|---|---|---|---|---|
| | Destination Index$_N$ | | | | | LCG ID$_N$ | | | |
| | Buffer Size$_N$ | | | | | | | | Oct3N–1 |
| | SL-PRS Bandwidth N | | | | | SL-PRS Number N | | | Oct3N |

FIG. 9F

| Second terminal device | First terminal device | Network device |
|---|---|---|

1001c: Information about
a sidelink bandwidth part
SL BWP

1001a: Third request

1001b: Third downlink control
information DCI (indicating a first
resource)

1001: First request
(for requesting a positioning reference
signal resource)

1002: First DCI
(indicating a first positioning reference
signal resource scheduled for the first
terminal device)

1003: Send a positioning
reference signal on the first
positioning reference signal
resource

1004: Measurement
information

1005: Feedback information
(for feeding back that the
positioning reference signal of the
first terminal device is
successfully sent or is
successfully received)

FIG. 10

| Communication device | First terminal device | Network device |
|---|---|---|

1101c: Information about a sidelink bandwidth part SL BWP

1101a: Third request

1101b: Third downlink control information DCI (indicating a first resource)

1101: First request
(for requesting a positioning reference signal resource and a data transmission resource)

1102: First DCI
(indicating a first positioning reference signal resource and a first data transmission resource that are scheduled for the first terminal device)

1103: Send a positioning reference signal on the first positioning reference signal resource, and send data on the first data transmission resource

1104: Measurement information

1105: Feedback information
(for feeding back that the positioning reference signal of the first terminal device is successfully sent or is successfully received)

FIG. 11

| Communication device | First terminal device | | Network device |
|---|---|---|---|

1201c: Information about a sidelink bandwidth part SL BWP

1201a: Third request

1201b: Third downlink control information DCI (indicating a first resource)

1201: First request (for requesting a positioning reference signal resource and a data transmission resource)

1202: First DCI (indicating a first positioning reference signal resource scheduled for the first terminal device)

1203: Second DCI (indicating a first data transmission resource scheduled for the first terminal device)

1204: Send a positioning reference signal on the first positioning reference signal resource

1205: Send data on the first data transmission resource

1206: Measurement information

1207: Feedback information (for feeding back that the positioning reference signal of the first terminal device is successfully sent or is successfully received)

FIG. 12

Communication apparatus 1300

1301

1302

Transceiver module —— Processing module

FIG. 13

Communication apparatus 1400

Processor 1410 —— Transceiver 1430

Memory 1420

FIG. 14

1500

Communication apparatus

1510

Processor

1520

Memory

Computer program code

1530

Transceiver

Transmitter

1531

1532

Receiver

1533

FIG. 15

## INTERNATIONAL SEARCH REPORT

| International application No. |
|---|
| **PCT/CN2024/090535** |

| A. | CLASSIFICATION OF SUBJECT MATTER |
|---|---|

H04W72/12(2023.01)i; H04W64/00(2009.01)i; H04W4/70(2018.01)i; H04W4/02(2018.01)i; H04W76/14(2018.01)i

According to International Patent Classification (IPC) or to both national classification and IPC

| B. | FIELDS SEARCHED |
|---|---|

Minimum documentation searched (classification system followed by classification symbols)

    IPC:H04W,H04L

Documentation searched other than minimum documentation to the extent that such documents are included in the fields searched

Electronic data base consulted during the international search (name of data base and, where practicable, search terms used)

    3GPP, CNTXT, ENTXT, ENTXTC, VEN: 侧, 旁, 链路, 定位参考信号, 数据, 资源, 下行控制信息, sidelink, SL, position+, PRS, reference, data, resource, DCI

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022184240 A1 (HUAWEI TECHNOLOGIES CO., LTD. et al.) 09 September 2022 (2022-09-09) <br> description, paragraphs 13-68 and 135-284, and figures 1-14 | 1-4, 8-20 |
| X | CN 115280860 A (QUALCOMM INC.) 01 November 2022 (2022-11-01) <br> description, paragraphs 74-148, and figures 1-14 | 1-4, 8-20 |
| X | CN 115699662 A (LENOVO (SINGAPORE) PTE. LTD.) 03 February 2023 (2023-02-03) <br> description, paragraphs 14-125, and figures 1-6 | 1-4, 8-20 |
| X | CN 115885574 A (QUALCOMM INC.) 31 March 2023 (2023-03-31) <br> description, paragraphs 34-186, and figures 1-15 | 1-4, 8-20 |
| A | SONY. "Considerations on Sidelink Positioning Resources" <br> *3GPP TSG RAN WG2 Meeting #121bis, R2-2303078*, 06 April 2023 (2023-04-06), <br> entire document | 1-20 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 August 2024** | **03 August 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | | International application No. |
|---|---|---|
| Information on patent family members | | **PCT/CN2024/090535** |

| Patent document cited in search report | | | Publication date (day/month/year) | Patent family member(s) | | | Publication date (day/month/year) |
|---|---|---|---|---|---|---|---|
| WO | 2022184240 | A1 | 09 September 2022 | EP | 4295621 | A1 | 27 December 2023 |
| CN | 115280860 | A | 01 November 2022 | WO | 2021188208 | A1 | 23 September 2021 |
| | | | | TW | 202137785 | A | 01 October 2021 |
| | | | | JP | 2023518708 | A | 08 May 2023 |
| | | | | US | 2021297206 | A1 | 23 September 2021 |
| | | | | US | 11601235 | B2 | 07 March 2023 |
| | | | | EP | 4122255 | A1 | 25 January 2023 |
| | | | | BR | 112022018215 | A2 | 25 October 2022 |
| | | | | KR | 20220155429 | A | 22 November 2022 |
| CN | 115699662 | A | 03 February 2023 | EP | 4158829 | A1 | 05 April 2023 |
| | | | | BR | 112022024306 | A2 | 27 December 2022 |
| | | | | WO | 2021240479 | A1 | 02 December 2021 |
| | | | | WO | 2021240478 | A1 | 02 December 2021 |
| | | | | EP | 4158828 | A1 | 05 April 2023 |
| | | | | KR | 20230019102 | A | 07 February 2023 |
| | | | | US | 2023224121 | A1 | 13 July 2023 |
| | | | | US | 2023199802 | A1 | 22 June 2023 |
| CN | 115885574 | A | 31 March 2023 | KR | 20230036080 | A | 14 March 2023 |
| | | | | WO | 2022010910 | A1 | 13 January 2022 |
| | | | | EP | 4179803 | A1 | 17 May 2023 |
| | | | | US | 2022015057 | A1 | 13 January 2022 |
| | | | | US | 11595931 | B2 | 28 February 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310547776